(19) Europäisches Patentamt
European Patent Office
Office européen des brevets

(11) EP 4 769 309 A1

(12) **EUROPEAN PATENT APPLICATION**
published in accordance with Art. 153(4) EPC

(43) Date of publication:
01.07.2026 Bulletin 2026/27

(21) Application number: 24878673.3

(22) Date of filing: 20.08.2024

(51) International Patent Classification (IPC):
*G06T 7/55* (2017.01)        *G06T 5/00* (2024.01)

(52) Cooperative Patent Classification (CPC):
**G06V 10/803; G06T 7/50; G06T 7/55; G06V 10/82;**
G06T 2207/10028; G06T 2207/20081;
G06T 2207/20084

(86) International application number:
**PCT/CN2024/113387**

(87) International publication number:
**WO 2025/082022 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 20.10.2023 CN 202311375449

(71) Applicant: **TENCENT TECHNOLOGY (SHENZHEN) COMPANY LIMITED**
**Shenzhen, Guangdong 518057 (CN)**

(72) Inventor: **LUO, Keyang**
**Shenzhen, Guangdong 518057 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **DEPTH MAP COMPLETION METHOD AND APPARATUS, COMPUTER DEVICE, AND STORAGE MEDIUM**

(57)    The present application relates to the field of artificial intelligence, and discloses a depth map completion method and apparatus, a computer device, and a storage medium. The method comprises: aggregating features of a scene image and a sparse depth map to obtain an aggregated feature, wherein the sparse depth map is a depth map having missing depth information corresponding to the scene image, and the aggregated feature is subjected to a noise addition process; on the basis of a diffusion strength parameter, diffusing and completing the aggregated feature by means of a depth completion network to obtain a depth completion feature, wherein the depth completion network is based on a diffusion model, and the diffusion strength parameter is used for controlling reverse diffusion strength in a depth completion process; and performing image restoration on the basis of the depth completion feature to obtain a dense depth map, wherein the depth information completeness of the dense depth map is higher than the depth information completeness of the sparse depth map. The method provided by the embodiments of the present application can reduce the risk of overfitting of a model in the training process, and improves the robustness of a depth completion network in a reasoning stage.

FIG. 3

**Description**

RELATED APPLICATION

This application claims priority to Chinese Patent Application No. 202311375449.1, entitled "DEPTH MAP COMPLETION METHOD AND APPARATUS, COMPUTER DEVICE, AND STORAGE MEDIUM" filed on October 20, 2023.

FIELD OF THE TECHNOLOGY

This application relates to the field of artificial intelligence, and in particular, to a depth map completion method and apparatus, a computer device, and a storage medium.

BACKGROUND OF THE DISCLOSURE

In the field of three-dimensional artificial intelligence generated content (AIGC), depth map completion is one of fundamental tasks. Depth map completion refers to a process of completing a sparse depth map based on the sparse depth map and its associated scene image to obtain a dense depth map, where the dense depth map contains scene depth information of each pixel in the scene image.

In related technologies, neural network models are typically employed to achieve depth map completion. For example, through supervised learning, large amounts of scene-specific images and depth information are collected and calibrated; then a neural network model is trained on calibrated data, and subsequently, a trained neural network model is configured to complete other sparse depth maps in a scene.

However, training neural network models using supervised learning methods is prone to overfitting, thus resulting in a poor depth completion quality.

SUMMARY

Embodiments of this application provide a depth map completion method and apparatus, a computer device, and a storage medium. The technical solutions are as follows:

According to one aspect, an embodiment of this application provides a method for generating a depth map, the method being executed by a computer device and including:

aggregating a scene feature of a scene image, a sparse depth feature of a sparse depth map and a noise to obtain an aggregated feature, the sparse depth map comprising depth information of a proper subset of pixels from the scene image;

performing depth completion on the aggregated feature through diffusing the aggregated feature by a depth completion network based on a diffusion strength parameter to obtain a depth completion feature, the diffusion strength parameter being configured for controlling a reverse diffusion strength of the depth completion; and

performing image restoration based on the depth completion feature to obtain a dense depth map with a higher depth information completeness than the sparse depth map.

According to another aspect, an embodiment of this application provides an apparatus for generating a depth map, the apparatus including:

a feature aggregation module, configured to aggregate a scene feature of a scene image, a sparse depth feature of a sparse depth map and a noise, to obtain an aggregated feature, the sparse depth map comprising depth information of a proper subset of pixels in the scene image;

a depth completion module, configured to performing depth completion on the aggregated feature through diffusing the aggregated feature by a depth completion network based on a diffusion strength parameter to obtain a depth completion feature, the diffusion strength parameter being configured for controlling a reverse diffusion strength of the depth completion; and

an image restoration module, configured to perform image restoration based on the depth completion feature to obtain a dense depth map with a higher depth information completeness than the sparse depth map.

According to another aspect, an embodiment of this application provides a computer device, including a processor and a memory, the memory having at least one computer instruction stored therein, the at least one computer instruction being loaded and executed by the processor to implement the depth map completion method according to the above aspect.

According to another aspect, an embodiment of this application provides a computer-readable storage medium, having at least one computer instruction stored therein, the at least one computer instruction being loaded and executed by a processor to implement the depth map completion method according to the above aspect.

According to another aspect, an embodiment of this application provides a computer program product, including computer instructions, the computer instructions being stored in a computer-readable storage medium, a processor of a computer device reading the computer instructions from the computer-readable storage medium, and the processor executing the computer instructions to cause the computer device to implement the depth map completion method according to the above aspect.

In the embodiments of this application, by aggregating the features of the scene image and the sparse depth map, and performing noising processing with the noise to obtain the aggregated feature, and performing the depth completion on the aggregated feature through diffusing the aggregated feature by a depth completion network based on the diffusion strength parameter, the depth completion feature for image restoration can be generated to obtain the dense depth map. By the method according to the embodiments of this application, a diffusion denoising process based on the diffusion model is incorporated into a depth completion task, thus reducing an overfitting risk of the depth completion network during training, and improving a robustness of the depth completion network in an inference stage, that is, improving a generation quality of the dense depth map.

BRIEF DESCRIPTION OF THE DRAWINGS

In order to more clearly describe the technical solutions in the embodiments of this application, the following will briefly introduce the drawings needed in the description of the embodiments. Clearly, the drawings in the following description are only some embodiments of this application. Those skilled in the art may obtain other drawings from these drawings without contributing any inventive labor.

FIG. 1 is a structural block diagram of a computer system according to an exemplary embodiment of this application.

FIG. 2 is a flowchart of a depth map completion method according to an exemplary embodiment of this application.

FIG. 3 is a schematic diagram of a depth completion network according to an exemplary embodiment of this application.

FIG. 4 is a schematic internal structural diagram of a residual layer ResBlock-D according to an exemplary embodiment of this application.

FIG. 5 is a schematic internal structural diagram of a residual layer ResBlock-U according to an exemplary embodiment of this application.

FIG. 6 is a schematic diagram of a process of performing depth completion on an aggregated feature through diffusing the aggregated feature by a depth completion network via N rounds of iterations according to an exemplary embodiment of this application.

FIG. 7 is a flowchart of training a depth completion network according to an exemplary embodiment of this application.

FIG. 8 is a structural block diagram of a depth map completion apparatus according to an exemplary embodiment of this application.

FIG. 9 is a schematic structural diagram of a computer device according to an exemplary embodiment of this application.

DESCRIPTION OF EMBODIMENTS

To make the objectives, technical solutions, and advantages of this application clearer, the following further describes the implementations of this application in detail with reference to the accompanying drawings.

In the field of three-dimensional AIGC, depth map completion is one of fundamental tasks. Depth map completion refers to a process of completing a sparse depth map based on the sparse depth map and its associated scene image to obtain a dense depth map, where the dense depth map contains scene depth information of each pixel in the scene image.

In related technologies, neural network models are typically employed to achieve depth map completion. For example, through supervised learning, large amounts of scene-specific images and depth information are collected and calibrated; then a neural network model is trained on calibrated data, and subsequently, a trained neural network model is configured to complete other sparse depth maps in a scene.

However, training neural network models using supervised learning methods is prone to overfitting, thus resulting in a poor depth completion quality.

This application provides a depth map completion method based on a diffusion model, which can improve a completion quality of the depth map.

The depth map completion method provided in this application may be applied to multiple application scenarios related to depth perception, including, but not limited to, the following scenarios:

1. Three-dimensional modeling field. The depth map completion method provided in this application may be used for completing depth maps acquired by various depth perception devices (such as laser radar and depth cameras), and may also complete depth maps obtained through computation by using multi-view depth algorithms, thus improving a depth perception completeness and improving a modeling quality of three-dimensional models.

2. Autonomous driving field. The depth map completion method provided in this application may be used for completing scene depth perceived by vehicle-mounted devices, thus improving an ability of autonomous driving algorithms to comprehensively perceive the surrounding environment and make more effective driving decisions.

3. Augmented reality field. The depth map completion method provided in this application may be used for improving depth estimation results for real scenes, thus enabling better understanding of a relative relationship between real scenes and virtual objects in the current viewpoint, and improving the user experience.

4. 3D printing field. The depth map completion method provided in this application may be used for better perceiving depth information of target objects, thus completely capturing details of objects-to-be-printed, and improving a quality of printed models.

In some embodiments, the depth map completion method provided in this application may be applied to single-vision depth map completion tasks, so as to complete sparse depth maps corresponding to single-vision scene images. Single-vision depth map completion may also be referred to as monocular depth estimation, which refers to using a single scene image from a unique viewpoint to estimate a distance of each pixel in the scene image relative to the capturing source.

The depth map completion method provided in this application may also be applied to gaming business scenarios, such as in augmented reality (AR) games or virtual reality (VR) games. To enhance a sense of augmented reality, users may use VR or AR devices to scan real environments, and the devices construct virtual environments in the game based on the environmental scanning results. Since constructing virtual environments requires depth information of the environment, when VR or AR devices can only obtain sparse depth maps based on the environmental scanning results, the depth map completion method provided in this application may be adopted, which performs depth map completion based on sparse depth maps and environmental images captured during scanning, thus constructing virtual environments based on dense depth maps. It is noted that the technical features in the following embodiments in this application can implements in their respective embodiments, or implemented in combination with features in any other embodiments. That is, the embodiments in the application can be implemented alone, or in combination with any one or more of the other embodiments in the application, to achieve different technical solutions and technical effects.

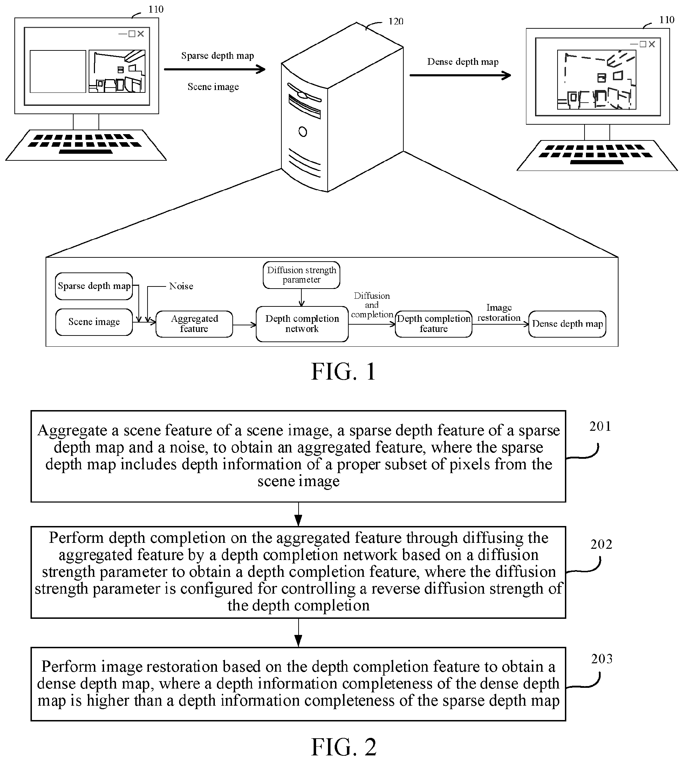

Please refer to FIG. 1, which shows a structural block diagram of a computer system according to an exemplary embodiment of this application. The computer system may include a terminal 110 and a server 120. Data communication between the terminal 110 and the server 120 is carried out through a communication network. In some embodiments, the communication network may be a wired network or a wireless network, and the communication network may be at least one of a local area network, a metropolitan area network, and a wide area network.

The terminal 110 is an electronic device installed with an application program that has a depth map completion function, and this depth map completion function is implemented based on a depth completion network by performing depth completion tasks. The depth map completion function may be a native application function or the third-party application function in the terminal 110; The terminal 110 may be a smart phone, a tablet, a laptop, a desktop computer, a smart TV, a wearable device, a vehicle-mounted terminal, or the like. FIG. 1 illustrates only by taking the terminal 110 being a desktop computer as an example, which is not limited thereto.

The server 120 includes at least one of one server, multiple servers, a cloud computing platform, and a virtualization center. In this embodiment of this application, the server 120 may be a backend server of an application program with a depth map completion function, and the server 120 stores a depth completion network and related network parameters.

In some embodiments, there is data exchange between the server and the terminal. Schematically, as shown in FIG. 1, the terminal 110 acquires a scene image and a sparse depth map corresponding to the scene image, and then transmits the scene image and the sparse depth map to the server 120. The server 120 aggregates features of the sparse depth map and the scene image (i.e., a scene feature and a sparse depth feature), and performs noising processing with a noise to obtain an aggregated feature. Subsequently, the server 120 performs feature completion on the aggregated feature through diffusing the aggregated feature by a depth completion network based on a diffusion strength parameter to obtain a depth completion feature, then performs image restoration based on the depth completion feature to obtain a dense depth map corresponding to the scene image, and finally returns the dense depth map to the terminal 110.

Referring to FIG. 2, FIG. 2 is a flowchart of a depth map completion method according to an exemplary embodiment of this application. Description will be made in this embodiment by taking the method for a computer device (including terminal and/or server) as an example. It is noted that the embodiments described with reference to the drawings in this application are merely exemplary, and it is not limited in this application that the respective method must include all the steps as described and illustrated; rather, the method in the application may include some or all of the steps as listed, and the steps may be combined with each other arbitrarily to form various embodiments of the application. The method includes the following operations:

Operation 201: Aggregate a scene feature of a scene image, a sparse depth feature of a sparse depth map and a noise, to obtain an aggregated feature, where the sparse depth map includes depth information of a proper subset of pixels from the scene image.

The scene image is an original image configured for computing a corresponding depth map. In some embodiments, the scene image is a red green blue (RGB) three-channel color image.

In some embodiments, the scene image is an image obtained by an image acquisition device (such as camera) by photographing.

In some embodiments, the scene image is an image obtained through preprocessing or various computations.

The sparse depth map is a depth map with depth information of a proper subset of pixels in the scene image. That is, the sparse depth map only contains depth information of some, rather than all, of the pixels in the scene image.

Exemplarily, the scene image is an RGB image with a resolution of (H, W), where H is height in pixels and W is width in pixels. The sparse depth map corresponding to the scene image is a depth map with a resolution of (H, W), but the sparse depth map only contains depth information of a proper subset of pixels in the scene image, that is, the depth information corresponding to some pixels in the scene image is missing in the sparse depth map.

In some embodiments, the sparse depth map is a depth map acquired by a depth perception device (such as laser radar, depth cameras). Due to the limitations of physical hardware, factors such as surface reflections of smooth objects, semi-transparent or transparent objects, dark-colored objects, and exceeding the measurement range may cause missing depth information in the depth map acquired by the depth perception device.

In some embodiments, the sparse depth map may also be a depth map obtained through preprocessing or various computations, with depth information of some pixels in the scene image missing therein.

In some embodiments, the computer device encodes the scene image and the sparse depth map respectively to obtain a scene feature corresponding to the scene image and a sparse depth feature corresponding to the sparse depth map, then aggregates the scene feature and the sparse depth feature, and performs nosing processing (or noise addition processing) thereon with the noise, to obtain an aggregated feature. In embodiments of the present application, the scene feature and the sparse depth feature may be aggregated to generate an intermediate aggregated feature, and the intermediate aggregated feature and the noise are then aggregated to finally generate the aggregated feature; or the scene feature, the sparse depth feature and noise may be aggregated by one aggregation step, to finally generate the aggregated feature. The aggregation of the noise into the aggregated feature may refer to the above nosing processing. It is noted that there may be intervening steps between the aggregation of the features and the noise and the finally obtained aggregated feature in some embodiments, which is described hereinafter in the description.

In some embodiments, the noise may be obtained by randomly sampling Gaussian noise or other types of noise. In some embodiments, the computer device may sample Gaussian noise based on an image size of the sparse depth map to obtain a noisy image with a resolution of (H, W), and a value $\varepsilon$ of each pixel in the noisy image is randomly determined based on a Gaussian distribution with a mean value of 0 and a standard deviation of 1. That is, $\varepsilon \sim G(0,1)$.

In some other embodiments, the computer device may also aggregate image features in other way, for example, by firstly fusing the scene image and the sparse depth map, and performing encoding and noising processing on a fused image to obtain the aggregated feature. The specific mode of aggregating the features is not limited in this embodiment of this application.

In some other embodiments, the computer device may also adopt a feature aggregation model that contains a convolutional neural network (CNN). By inputting the scene image and the sparse depth map into the feature aggregation model, an aggregated feature outputted by the feature aggregation model and subjected to noising processing is directly obtained.

Exemplarily, a feature resolution of the aggregated feature obtained through feature aggregation processing is (H, W).

Operation 202: Perform depth completion on the aggregated feature through diffusing the aggregated feature by a depth completion network based on a diffusion strength parameter to obtain a depth completion feature, where the diffusion strength parameter is configured for controlling a reverse diffusion strength of the depth completion.

The depth completion network is configured for performing depth completion processing on the aggregated feature, so that the output depth completion feature can be configured for restoring a depth map containing more depth information.

In some embodiments, the depth completion network may be a depth completion network based on a diffusion model,such as a DiffDC network.

The diffusion model, also known as a denoising diffusion probabilistic model (DDPM), is a model that can be configured for implementing artificial intelligence content generation. The theoretical basis of the algorithm of the diffusion model is to train a parameterized Markov chain through variational inference.

A training process of the diffusion model includes two stages, namely a forward diffusion process and a reverse diffusion process.

The forward diffusion process is configured for giving an initial data distribution and continuously adding Gaussian noise to the distribution. The forward diffusion process is a Markov process.

The reverse diffusion process is configured for continuously restoring initial data from the noise, predicting the noise added at each operation through the reverse diffusion process, and gradually restoring a noise-free image by removing the noise.

In some embodiments, the diffusion strength parameter refers to a parameter configured for controlling a reverse diffusion strength in the depth completion process. That is, the computer device may adjust a denoising strength of each operation in the reverse diffusion process by setting different diffusion strength parameters. In some embodiments, the diffusion strength parameter may be a fixed value preset before depth completion, or a value dynamically adjusted based on the depth completion progress in the depth completion process, which is not limited in this embodiment of this application. Exemplarily, the diffusion strength parameter t may be randomly determined based on a (0,1) uniform distribution. That is, $t \sim U(0, I)$.

In some embodiments, after obtaining the aggregated feature, the computer device performs depth completion on the aggregated feature through diffusing the aggregated feature by the depth completion network based on the diffusion strength parameter to obtain a depth completion feature corresponding to the sparse depth map.

Operation 203: Perform image restoration based on the depth completion feature to obtain a dense depth map, where a depth information completeness of the dense depth map is higher than a depth information completeness of the sparse depth map.

In a possible implementation, the computer device may perform image restoration through a neural network model based on the depth completion feature to obtain a dense depth map. For example, the computer device inputs the depth completion feature into the CNN, and the CNN learns and extracts the depth completion feature to generate a dense depth map.

In some embodiments, the depth information completeness of the dense depth map is higher than the depth information completeness of the sparse depth map, that is, a number of pixels with depth information in the dense depth map is greater than a number of pixels with depth information in the sparse depth map.

Exemplarily, depth information of 1000 pixels is missing in the sparse depth map, while depth information of only 500 pixels or 300 pixels is missing in the dense depth map, or the dense depth map contains depth information of each pixel.

In some embodiments, the computer device may further gradually complete the depth information of pixels in the sparse depth map through multiple rounds of iterations, that is, gradually obtain a dense depth map with a higher depth information completeness through multiple rounds of iterations. The more the iterations, the higher the depth information completeness of the dense depth map.

To sum up, by aggregating the features of the scene image and the sparse depth map and the noise, to obtain an aggregated feature, and performing depth completion on the aggregated feature through diffusing the aggregated feature by the depth completion network based on the diffusion strength parameter, the depth completion feature for image restoration can be generated to obtain the dense depth map. By the method according to the embodiment of this application, a diffusion denoising process based on the diffusion model is incorporated into a depth completion task, thus reducing an overfitting risk of the depth completion network during training, and improving a robustness of the depth completion network in an inference stage, that is, improving a generation quality of the dense depth map.

In regard to obtaining the aggregated feature, in some embodiments, the computer device may perform encoding on the features of the sparse depth map and the scene image respectively, and then perform nosing on an encoded feature to obtain the aggregated feature. This process includes the following operations:

Operation 1: Encode a feature of the sparse depth map through a first encoder to obtain the sparse depth feature.

In some embodiments, the computer device may encode the feature of the sparse depth map through the first encoder to obtain a sparse depth feature.

In some embodiments, the first encoder may be an encoder with a CNN structure, an auto-encoder, a Transformer encoder, or any other encoder capable of encoding the image feature, which is not limited in this embodiment of this application.

In some embodiments, the first encoder is an encoder with a CNN structure, and the first encoder includes two convolutional neural network layers and a nonlinear activation function. The number of convolutional kernels in the first CNN layer and the second CNN layer may be the same or different. For example, the first CNN layer includes 32 $1 \times 1$ convolutional kernels, and the second CNN layer includes 32 $3 \times 3$ convolutional kernels.

In some embodiments, an image resolution of the sparse depth map may be *(H, W),* and the sparse depth map is a single-channel image that only contains depth information of pixels.

Exemplarily, the computer device encodes a sparse depth map $D_{sparse}$ with a resolution of *(H, W)* into a sparse depth feature $F_s$ through the first encoder, and a calculation process may be represented as the following formula:

$$F_s = CNN_2^s(SiLU(CNN_1^s(D_{sparse}))),$$

where SiLU is an activation function, $CNN_1^s$ is a two-dimensional $1 \times 1$ convolutional operation, with the number of input channel being 1 and the number of output channels being 32, and $CNN_2^s$ is a two-dimensional $3 \times 3$ convolutional operation, with the number of input channel being 32 and the number of output channels being 32.

Operation 2: Encode a feature of the scene image through a second encoder to obtain the scene feature.

In some embodiments, the computer device may encode the feature of the scene image through the second encoder to obtain a scene feature.

In some embodiments, the second encoder may be an encoder with a CNN structure, an auto-encoder, a Transformer encoder, or any other encoder capable of encoding the image feature, which is not limited in this embodiment of this application.

In some embodiments, the second encoder is an encoder with a CNN structure, and the second encoder includes two convolutional neural network layers and a nonlinear activation function. The number of convolutional kernels in the first CNN layer and the second CNN layer may be the same or different. For example, the first CNN layer and the second CNN layer both include 32 $3 \times 3$ convolutional kernels.

In some embodiments, in order to improve an image data processing efficiency, before encoding the scene image through the second encoder, the computer device may firstly perform normalization processing on the pixel value of each pixel in the scene image, and then encode the feature of the scene image after normalization processing by using the second encoder.

In some embodiments, the image resolution of the scene image may be *(H, W),* and the scene image is a three-channel image, including RGB three channels. In some embodiments, the pixel value of each pixel in the scene image is between 0 and 255.

Exemplarily, the computer device encodes a scene image $I_{ref}$ with a resolution of *(H, W)* into a scene feature $F_r$ through the second encoder, and a calculation process may be represented as the following formula:

$$F_r = CNN_2^r(SiLU(CNN_1^r(I_{ref}/255.0))),$$

where $I_{ref}$/255.0 represents normalization processing on the pixel value of the scene image and scaling the pixel value within a range of 0-1, $CNN_1^r$ is a two-dimensional $3 \times 3$ convolutional operation, with the number of input channels being 3 and the number of output channels being 32, and $CNN_2^r$ is a two-dimensional $3 \times 3$ convolutional operation, with the number of input channels being 32 and the number of output channels being 32.

Operation 3: Aggregate the scene feature, the sparse depth feature and the noise, , to obtain an aggregated feature, where dimensions of the scene feature, the sparse depth feature, and the noise are the same as each other.

In some embodiments, after obtaining the sparse depth feature corresponding to the sparse depth map and the scene feature corresponding to the scene image, the computer device may aggregate the scene feature and the sparse depth features, and then performs noising processing with the noise, (for example, by further aggregating the noise) to obtain the aggregated feature.

Dimensions of the scene feature, the sparse depth feature, and the noise are the same as each other. In some embodiments, resolutions and channel dimensions of the scene feature, the sparse depth feature, and the noise are the same as each other. Exemplarily, the resolution of the scene feature is $H \times W$, and the channel dimension is 32; the resolution of the sparse depth feature is $H \times W$, and the channel dimension is 32; the resolution of the noise is $H \times W$, and the channel dimension is 32. The channel dimension may indicate a number of channels in the scene feature, or the dimension of each of the above features may indicate a number of elements, such as channels, in a vector representing the respective feature.

In some embodiments, the computer device may firstly stitch the scene feature, the sparse depth feature, and the noise, and then perform a convolutional operation on a stitched feature obtained by the above stitching step, to obtain the aggregated feature.

In some embodiments, the computer device may firstly stitch the sparse depth feature $F_s$, the scene feature $F_r$, and the noise $X_g$ to obtain a tensor $F_{raw} = Concatenate(X_g, F_r, F_s)$, and then perform a convolutional operation on the stitched feature obtained by the stitching step to obtain the aggregated feature $F_{in}^0$:

$$F_{in}^0 = SiLU(CNN(F_{raw})),$$

where the resolution of the aggregated feature $F_{in}^0$ is $(H, W)$, and the number of feature channels is 64.

Those skilled in the art can understand that the above descriptions of the first encoder, the second encoder, and the feature aggregation mode are only exemplary, and other reasonable feature encoding modes may also be adopted to encode and aggregate the scene image and the sparse depth map. For example, the two-dimensional $1 \times 1$ convolutional operation in the first encoder may be replaced with a multi-layer perceptron or transformer structure, the second encoder may be replaced with any image pre-training large model, and such variations are still within the scope of protection of this application.

In some embodiments, the depth completion network includes a downsampling diffusion subnetwork and an upsampling diffusion subnetwork. In order to extract depth information from the aggregated feature, the computer device may firstly perform downsampling diffusion on the aggregated feature to obtain a downsampling depth feature, and then perform upsampling diffusion on the downsampling depth feature to obtain a depth completion feature. The process includes the following operations:

Operation 1: Perform downsampling diffusion on the aggregated feature by a downsampling diffusion subnetwork based on a diffusion strength parameter to obtain a downsampling depth feature.

In some embodiments, the computer device may perform downsampling diffusion on the aggregated feature by the downsampling diffusion subnetwork based on the diffusion strength parameter to obtain a downsampling depth feature. In some embodiments, in a case that the resolution of the aggregated feature is $H \times W$ and the channel dimension is 64, the resolution of the downsampling depth feature may be $(H/8, W/8)$ and the channel dimension may be 256.

In some embodiments, in order to improve the downsampling accuracy and acquire more effective image features, the computer device may also configure multiple downsampling layers in the downsampling diffusion subnetwork for level-by-level downsampling diffusion on the aggregated feature.

In some embodiments, the downsampling diffusion subnetwork includes n downsampling layers, where n is a positive integer.

Exemplarily, in a case that n=4, the downsampling diffusion subnetwork performs downsampling diffusion on the aggregated feature level by level through four downsampling layers. Resolution levels are respectively $(H, W)$, $(H/2, W/2)$, $(H/4, W/4)$, and $(H/8, W/8)$. The convolutional feature dimensions (number of channels) corresponding to different resolution levels are respectively 64, 128, 128, 256.

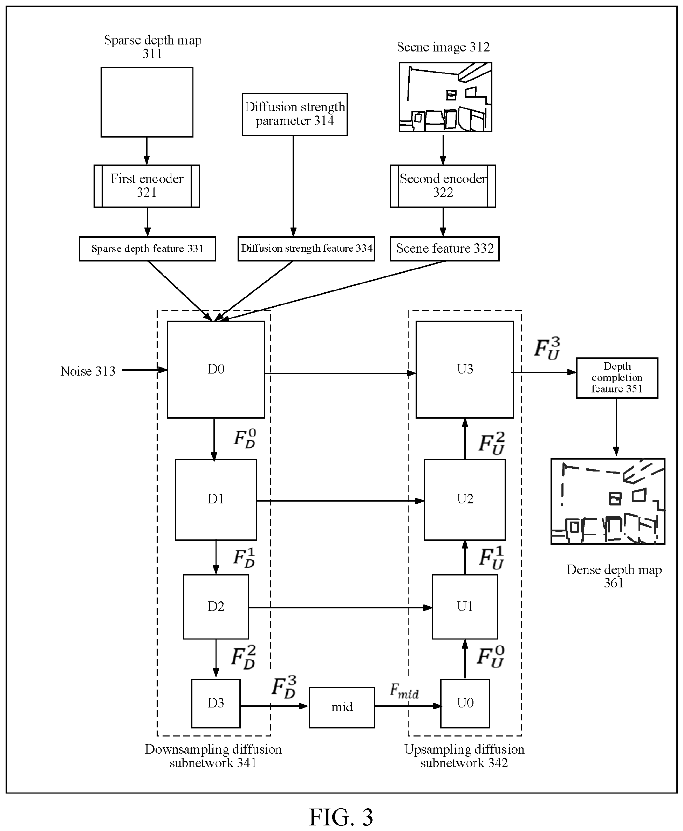

Referring to FIG. 3, FIG. 3 is a schematic diagram of a depth completion network according to an exemplary embodiment of this application.

As shown in FIG. 3, the depth completion network includes a downsampling diffusion subnetwork 341. The downsampling diffusion subnetwork 341 includes n downsampling layers (n=4), respectively including downsampling layers D0, D1, D2, and D3.

In regard to the process of performing downsampling diffusion on the aggregated feature through the downsampling diffusion subnetwork to obtain the downsampling depth feature, in some embodiments, the computer device may perform downsampling processing on the aggregated feature sequentially through the n downsampling layers.

In some embodiments, the computer device may perform downsampling diffusion by the first downsampling layer of the n downsampling layers on the aggregated feature based on the diffusion strength parameter to obtain the first downsampling feature, then perform downsampling diffusion on an $i^{th}$ downsampling feature by an $(i+1)^{th}$ downsampling layer of the n downsampling layers based on the diffusion strength parameter to obtain an $(i+1)^{th}$ downsampling feature, and finally use an $n^{th}$ downsampling feature outputted by an $n^{th}$ downsampling layer of the n downsampling layers as the downsampling depth feature.

Schematically, as shown in FIG. 3, the computer device may encode a sparse depth map 311 through the first encoder 321 to obtain a sparse depth feature 331, encode a scene image 312 through the second encoder 322 to obtain a scene feature 332, and aggregate the sparse depth feature 331, and the scene feature 332 and a noise 313 to obtain the aggregated feature, and the aggregated feature serves as an input of the first downsampling layer D0 in the downsampling diffusion subnetwork 341.

In some embodiments, the input of the downsampling diffusion subnetwork further includes an encoded diffusion strength parameter. Schematically, as shown in FIG. 3, the computer device encodes the feature of the diffusion strength parameter 314 to obtain a diffusion strength feature 334, and uses the diffusion strength feature 334 as the input of the first downsampling layer D0 in the downsampling diffusion subnetwork 341.

The mode of encoding of the diffusion strength parameter t to obtain the diffusion strength feature $F_t$ may be represented as the following formula. Firstly, the diffusion strength parameter t is expanded into the following high-dimensional vector $E_t(t)$:

$$E_t(t) = \left\{ \sin\left(t \cdot e^0\right), \cos\left(t \cdot e^0\right), \sin\left(t \cdot e^\delta\right), \cos\left(t \cdot e^\delta\right), \cdots, \cos\left(t \cdot e^{31\delta}\right) \right\},$$

where $\delta$ = -0.28782, sin and cos are respectively a sine function and a cosine function, and $E_t(t)$ is a 64-dimension feature vector.

Then, a high-dimensional diffusion strength feature $F_t$ is obtained through two layers of linear neural networks:

$$F_t = linear_2(\text{SiLU}(linear_1(E_t(t)))),$$

where $linear_1$ and $linear_2$ are respectively linear neural networks of $R^{64} \rightarrow R^{256}$ and $R^{256} \rightarrow R^{256}$.

Those skilled in the art can understand that the above mode of encoding the diffusion strength parameter is only exemplary, and other reasonable feature encoding modes may also be used to encode the diffusion strength parameter. For example, the linear neural networks may be replaced with transformer structures, or the sin and cos function may be replaced with other basis functions (such as spherical harmonic functions), and such variations are still within the scope of protection of this application.

The process of obtaining the downsampling depth feature will be described below by taking the downsampling diffusion subnetwork 341 including four downsampling layers as an example.

In some embodiments, the computer device may perform downsampling diffusion on the aggregated feature by the first downsampling layer based on the diffusion strength parameter to obtain the first downsampling feature.

For example, the computer device inputs the diffusion strength feature 334 and the aggregated feature (obtained by aggregating the sparse depth feature 331 and the scene feature 332 and performing nosing processing with the noise 313 into the first downsampling layer D0 to obtain the first downsampling feature $F_D^0$ outputted by D0.

Exemplarily, the first downsampling layer D0 performs 1× downsampling, and the first downsampling feature $F_D^0$ outputted by the first downsampling layer D0 is a feature vector with a resolution of *(H, W)* and the number of feature channels of 64.

In some embodiments, the computer device may perform downsampling diffusion on an $i^{th}$ downsampling feature by an $(i+1)^{th}$ downsampling layer based on the diffusion strength parameter to obtain an $(i+1)^{th}$ downsampling feature.

Exemplarily, i = 1, 2, or 3.

For example, the computer device inputs the first downsampling feature $F_D^0$ and the diffusion strength feature 334 into the second downsampling layer D1, and the second downsampling layer D1 performs downsampling diffusion on the first downsampling feature $F_D^0$ based on the diffusion strength feature 334 to obtain the second downsampling feature $F_D^1$.

Exemplarily, the second downsampling layer D1 performs 2× downsampling, and the second downsampling feature $F_D^1$ is a feature vector with a resolution of *(H/2, W/2)* and the number of feature channels of 128.

Further, the computer device inputs the second downsampling feature $F_D^1$ into the third downsampling layer D2, and the third downsampling layer D2 performs downsampling diffusion on the second downsampling feature $F_D^1$ to obtain the third downsampling feature $F_D^2$.

Exemplarily, the third downsampling layer D2 performs 2× downsampling, and the third downsampling feature $F_D^2$ is a feature vector with a resolution of *(H/4, W/4)* and the number of feature channels of 128.

Finally, the computer device inputs the third downsampling feature $F_D^2$ into the fourth downsampling layer D3, and the fourth downsampling layer D3 performs downsampling diffusion on the third downsampling feature $F_D^2$ to obtain the fourth downsampling feature $F_D^3$, and the computer device uses the fourth downsampling feature $F_D^3$ as the downsampling depth feature.

Exemplarily, the fourth downsampling layer D3 performs 2× downsampling, and the fourth downsampling feature $F_D^3$ is a feature vector with a resolution of *(H/8, W/8)* and the number of feature channels of 256.

Operation 2: Performing upsampling diffusion on the downsampling depth feature by an upsampling diffusion subnetwork based on the diffusion strength parameter to obtain a depth completion feature.

In some embodiments, the computer device may perform upsampling diffusion on the downsampling depth feature by the upsampling diffusion subnetwork based on the diffusion strength parameter to obtain a depth completion feature. In some embodiments, in a case that the resolution of the aggregated feature is $H \times W$, and the channel dimension is 64; and the resolution of the downsampling depth feature is *(H/8, W/8)*, and the channel dimension is 256, the resolution of the depth completion feature obtained through upsampling diffusion may be $H \times W$, and the channel dimension may be 64.

In some embodiments, in order to improve an upsampling accuracy and acquire more effective image features, the computer device may also configure multiple upsampling layers in the upsampling diffusion subnetwork for level-by-level upsampling diffusion on the downsampling depth feature.

In some embodiments, the number of the upsampling layers contained in the upsampling diffusion subnetwork may be the same as the number of the downsampling layers contained in the downsampling diffusion subnetwork, that is, the upsampling layers also include n upsampling layers.

Exemplarily, in a case that n=4, the upsampling diffusion subnetwork performs upsampling diffusion on the downsampling depth feature level by level through four upsampling layers. Resolution levels are respectively *(H/8, W/8)*, *(H14, W/4)*, *(H/2, W/2)*, and *(H, W)*. The convolutional feature dimensions (number of channels) corresponding to different resolution levels are respectively 256, 128, 128, and 64.

Schematically, as shown in FIG. 3, the depth completion network includes an upsampling diffusion subnetwork 342. The upsampling diffusion subnetwork 342 includes n upsampling layers (n=4), respectively including upsampling layers U0, U1, U2, and U3.

In some embodiments, the computer device may perform upsampling diffusion on the downsampling depth feature by the first upsampling layer of the n upsampling layers based on the diffusion strength parameter to obtain the first upsampling feature, then perform upsampling diffusion on an $i^{th}$ upsampling feature by an $(i+1)^{th}$ upsampling layer of the n upsampling layers based on the diffusion strength parameter to obtain an $(i+1)^{th}$ upsampling feature, and finally determine an $n^{th}$ upsampling feature outputted by an $n^{th}$ upsampling layer of the n upsampling layers as the depth completion feature.

In some embodiments, in order to further extract the depth feature, before using the upsampling diffusion subnetwork to process the downsampling depth feature, the computer device may also configure a bottleneck encoding subnetwork between the downsampling diffusion subnetwork and the upsampling diffusion subnetwork. The bottleneck encoding subnetwork is firstly configured for performing bottleneck encoding on the downsampling depth feature, and then an encoded feature is inputted into the upsampling diffusion subnetwork to optimize the sampling process and reduce the risk of overfitting.

In some embodiments, the resolution of the input feature of the bottleneck encoding subnetwork is *(H/8, W/8)*, and the number of feature channels is 256; and the resolution of the output feature is *(H/8, W/8)*, and the number of feature channels is 256. That is, the bottleneck encoding subnetwork does not change the resolution of the feature and the number of channels.

Schematically, as shown in FIG. 3, the depth completion network includes a bottleneck encoding subnetwork mid, and the bottleneck encoding subnetwork mid is located between the downsampling diffusion subnetwork 341 and the upsampling diffusion subnetwork 342.

In some embodiments, the computer device may input the fourth downsampling feature $F_D^3$ outputted by the fourth downsampling layer D3 into the bottleneck encoding subnetwork mid to obtain an output result $F_{mid}$.

The process of obtaining the depth completion feature will be described below by taking the upsampling diffusion subnetwork 342 including four upsampling layers as an example.

In some embodiments, the computer device may perform upsampling diffusion on the downsampling depth feature by the first upsampling layer based on the diffusion strength parameter to obtain the first upsampling feature.

For example, the computer device inputs the diffusion strength feature 334 and $F_{mid}$ inputted based on the downsampling depth feature $F_D^3$ into the first upsampling layer U0, and the first upsampling layer U0 performs upsampling diffusion $F_{mid}$ to obtain the first upsampling feature $F_U^0$.

Exemplarily, the first upsampling layer U0 performs 2× upsampling, and the first upsampling feature $F_U^0$ is a feature vector with a resolution of *(H/4, W/4)* and the number of feature channels of 128.

In some embodiments, the computer device may perform upsampling diffusion on an $i^{th}$ upsampling feature by an $(i+1)^{th}$ upsampling layer based on the diffusion strength parameter to obtain an $(i+1)^{th}$ upsampling feature.

Exemplarily, i = 1, 2, or 3.

For example, the computer device inputs the first upsampling feature $F_U^0$ and the diffusion strength feature 334 into the second upsampling layer U1, and the second upsampling layer U1 performs upsampling diffusion on the first upsampling feature $F_U^0$ to obtain the second upsampling feature $F_U^1$.

Exemplarily, the second upsampling layer U1 performs 2× upsampling, and the second upsampling feature $F_U^1$ is a feature vector with a resolution of *(H/2, W/2)* and the number of feature channels of 128.

Further, the computer device inputs the second upsampling feature $F_U^1$ into the third upsampling layer U2, and the third upsampling layer U2 performs upsampling diffusion on the second upsampling feature $F_U^1$ to obtain the third upsampling feature $F_U^2$.

Exemplarily, the third upsampling layer U2 performs 2× upsampling, and the third upsampling feature $F_U^2$ is a feature vector with a resolution of *(H, W)* and the number of feature channels of 64.

Finally, the computer device inputs the third upsampling feature $F_U^2$ into the fourth upsampling layer U3, and the fourth upsampling layer U3 performs upsampling diffusion on the third upsampling feature $F_U^2$ to obtain the fourth upsampling feature $F_U^3$, and the computer device uses the fourth upsampling feature $F_U^3$ as the depth completion feature.

Exemplarily, the fourth upsampling layer U0 performs 1× upsampling, and the fourth upsampling feature $F_U^3$ is a feature vector with a resolution of *(H, W)* and the number of feature channels of 64.

In some embodiments, the computer device may perform image restoration based on the depth completion feature $F_U^3$ 351 to obtain a dense depth map 361, where a depth information completeness of the dense depth map 361 is higher than a depth information completeness of the sparse depth map 311.

In some embodiments, the image resolution of the dense depth map may be *(H, W)*, and the dense depth map is a single-channel image that only contains depth information of pixels.

Exemplarily, the process of performing image restoration based on the depth completion feature $F_U^3$ 351 to obtain a dense depth map 361 may be implemented through a single two-dimensional convolutional operation, and the formula is as follows:

$$CNN(F_U^0).$$

In some embodiments, in order to fuse feature information of different scales, before upsampling diffusion, the computer device may firstly fuse the ith upsampling feature and an (n-i)th downsampling feature to obtain an ith fused feature, and then perform upsampling diffusion on the ith fused feature by the (i+1)th upsampling layer based on the diffusion strength parameter to obtain an (i+1)th upsampling feature.

Exemplarily, i = 1, 2, or 3.

For example, the computer device firstly fuses the first upsampling feature $F_U^0$ and the third downsampling feature $F_D^2$ to obtain the first fused feature $F_U^0 \oplus F_D^2$; and then perform upsampling diffusion on the first fused feature by the second upsampling layer U1 based on the diffusion strength parameter to obtain the second upsampling feature $F_U^1$.

Further, the computer device fuses the second upsampling feature $F_U^1$ and the second downsampling feature $F_D^1$ to obtain the second fused feature $F_U^1 \oplus F_D^1$; and then perform upsampling diffusion on the second fused feature by the third upsampling layer U2 based on the diffusion strength parameter to obtain the third upsampling feature $F_U^2$.

Finally, the computer device fuses the third upsampling feature $F_U^2$ and the first downsampling feature $F_D^0$ to obtain third fused feature $F_U^2 \oplus F_D^0$; and then perform upsampling diffusion on the third fused feature by the fourth upsampling layer U3 based on the diffusion strength parameter to obtain fourth upsampling feature $F_U^3$.

In this embodiment, by configuring multiple downsampling layers in the downsampling diffusion subnetwork to perform downsampling on the aggregated feature layer by layer, and configuring multiple upsampling layers in the upsampling diffusion subnetwork to perform upsampling on the downsampling depth feature layer by layer, the sampling accuracy is improved, thus helping to fully extract the image feature.

In addition, in the upsampling process, by fusing the ith upsampling feature and the (n-i)th downsampling feature to obtain the ith fused feature and then performing upsampling on the ith fused feature, the upsampling layers in the upsampling diffusion subnetwork can learn feature information of different scales, thus improving the depth completion effect.

The sampling diffusion process of each downsampling layer in the downsampling diffusion subnetwork and each upsampling layer in the upsampling diffusion subnetwork will be described below through embodiments.

In some embodiments, each of the downsampling layers, the upsampling layers, and the bottleneck encoding subnetwork mid includes a residual layer ResBlock (Residual Block), an attention layer Attention, and a residual layer ResBlock that are sequentially connected.

Based on the difference in sampling operations of the sampling layer (Sample) in the residual layer ResBlock, the residual layer ResBlock may be further divided into three types, i.e., ResBlock-D, ResBlock-I, and ResBlock-U. In a case that the Sample operation is downsampling, the corresponding ResBlock is ResBlock-D; in a case that the Sample operation is upsampling, the corresponding ResBlock is ResBlock-U; and in a case that the Sample operation is identity mapping, that is, no sampling operation is performed, the corresponding ResBlock is ResBlock-I.

Exemplarily, the downsampling layer D0 and the upsampling layer U3 sequentially include a residual layer ResBlock-I, an attention layer Attention, and a residual layer ResBlock-I.

Exemplarily, the downsampling layers D1, D2, and D3 sequentially include a residual layer ResBlock-D, an attention layer Attention, and a residual layer ResBlock-I.

Exemplarily, the upsampling layers U0, U1, and U2 sequentially include a residual layer ResBlock-U, an attention layer Attention, and a residual layer ResBlock-I.

In the downsampling process, the residual layer ResBlock-D is configured for fusing the ith downsampling feature and the diffusion strength feature through skip connection.

In regard to the downsampling diffusion process of a single downsampling layer, in some embodiments, the computer device may perform downsampling on the ith downsampling feature to obtain an intermediate downsampling feature, and fuse the diffusion strength feature and the intermediate downsampling feature to generate a fused downsampling feature, and then fuse the intermediate downsampling feature and the fused downsampling feature to generate intermediate an (i+1)th downsampling feature.

The diffusion strength feature $F_t$ is obtained based on feature extraction on the diffusion strength parameter t.

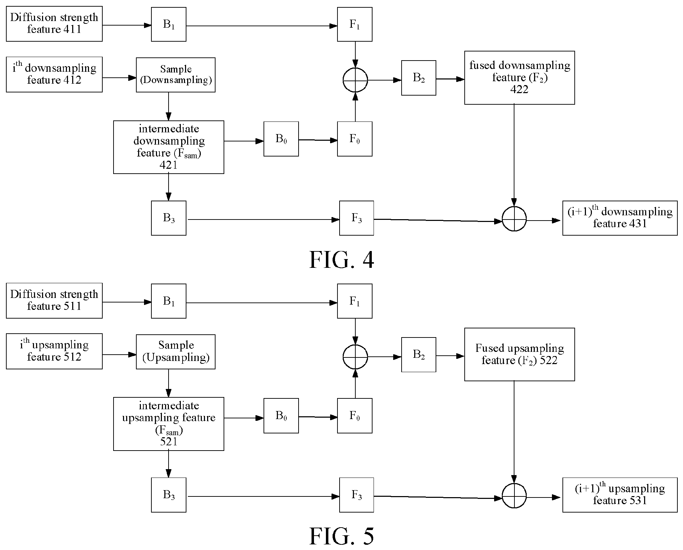

Referring to FIG. 4, FIG. 4 is a schematic internal structural diagram of a residual layer ResBlock-D according to an exemplary embodiment of this application.

The process of generating the $(i+1)^{th}$ downsampling feature will be described by taking ResBlock being ResBlock-D as an example.

The sampling layer (Sample) in the residual layer ResBlock-D is configured for performing downsampling on the $i^{th}$ downsampling feature 412 to obtain an intermediate downsampling feature 421 ($F_{sam}$). By representing the $i^{th}$ downsampling feature 412 with $F_{in}$, representing the diffusion strength feature 411 with $F_t$, representing the fused downsampling feature 422 with $F_2$, and representing the $(i+1)^{th}$ downsampling feature 431 outputted by the residual layer with $F_{out}$, the computation process of $F_{out}$ is as follows:

$$F_{sam} = Sample(F_{in});$$

$$F_0 = B_0(F_{sam}) = SiLU(GN(CNN(F_{sam})));$$

$$F_1 = B_1(F_t) = SiLU(linear(F_t));$$

$$F_2 = B_2(F_0 \oplus F_1) = SiLU(GN(CNN(F_0 \oplus F_1)));$$

$$F_3 = B_3(F_{sam}) = SiLU(GN(CNN(F_{sam})));$$

$$F_{out} = F_2 \oplus F_3,$$

where $\oplus$ is a tensor addition operation following a tensor propagation mechanism, SiLU is an activation function, *linear* is a linear neural network, *GN* is group normalization, and *CNN* is a two-dimensional convolutional operation.

In the upsampling process, the residual layer ResBlock-U is configured for fusing the $i^{th}$ upsampling feature and the diffusion strength feature through skip connection.

In regard to the upsampling diffusion process of a single upsampling layer, in some embodiments, the computer device may perform upsampling on the $i^{th}$ upsampling feature to obtain an intermediate upsampling feature, and fuse the diffusion strength feature and the intermediate upsampling feature to generate a fused upsampling feature, and then fuse the intermediate upsampling feature and the fused upsampling feature to generate an $(i+1)^{th}$ upsampling feature.

The diffusion strength feature $F_t$ is obtained based on feature extraction on the diffusion strength parameter t.

Referring to FIG. 5, FIG. 5 is a schematic internal structural diagram of a residual layer ResBlock-U according to an exemplary embodiment of this application.

The process of generating the $(i+1)^{th}$ upsampling feature will be described by taking ResBlock being ResBlock-U as an example.

The sampling layer (Sample) in the residual layer ResBlock-U is configured for performing upsampling on the $i^{th}$ upsampling feature 512 to obtain an intermediate upsampling feature 521 ($F_{sam}$). By representing the $i^{th}$ upsampling feature 512 with $F_{in}$, representing the diffusion strength feature 511 with $F_t$, representing the fused upsampling feature 522 with $F_2$, and representing the $(i+1)^{th}$ upsampling feature 531 outputted by the residual layer with $F_{out}$, the computation process of $F_{out}$ is as follows:

$$F_{sam} = Sample(F_{in});$$

$$F_0 = B_0(F_{sam}) = SiLU(GN(CNN(F_{sam})));$$

$$F_1 = B_1(F_t) = SiLU(linear(F_t));$$

$$F_2 = B_2(F_0 \oplus F_1) = SiLU(GN(CNN(F_0 \oplus F_1)));$$

$$F_3 = B_3(F_{sam}) = SiLU(GN(CNN(F_{sam})));$$

$$F_{out} = F_2 \oplus F_3,$$

where $\oplus$ is a tensor addition operation following a tensor propagation mechanism, SiLU is an activation function, *linear* is a linear neural network, *GN* is group normalization, and *CNN* is a two-dimensional convolutional operation.

In this embodiment, the ith upsampling feature (or ith downsampling feature) and the diffusion strength feature may be fused based on the residual layer ResBlock through skip connection, thus achieving the control of the reverse diffusion strength in the depth completion process by using the diffusion strength feature.

In order to obtain a dense depth map with a high depth information completeness, in some embodiments, the computer device may also achieve depth completion through multiple round of iterations.

In some embodiments, in the depth completion processing through N rounds of iterations, the diffusion strength parameters used in each round may be different. In some embodiments, as the number of rounds of iteration increases, the diffusion strength parameter may become smaller, thus achieving a depth completion process from coarse to fine.

In some embodiments, before depth completion, the computer device may firstly determine a diffusion strength parameter sequence, where the diffusion strength parameter sequence includes N diffusion strength parameters (N is a positive integer), and a $(k+1)^{th}$ diffusion strength parameter is smaller than a $k^{th}$ diffusion strength parameter in the diffusion strength parameter sequence, where k is an integer from 1 to N-1.

In some embodiments, the diffusion strength parameter sequence may be randomly determined based on a (0,1) uniform distribution. For example, the computer device may randomly select N diffusion strength parameters based on a (0,1) uniform distribution, sort them in a descending order, denote them as $\{t_0, t_1, \cdots, t_{N-1}\}$, and then sequentially use $t_0$ to $t_{N-1}$ as diffusion strength parameters $t_i$ as inputs for each iteration.

In some embodiments, the computer device may perform depth completion on the aggregated feature through diffusing the aggregated feature by the depth completion network based on the diffusion strength parameters in the diffusion strength parameter sequence via N round of iterations to obtain the depth completion feature.

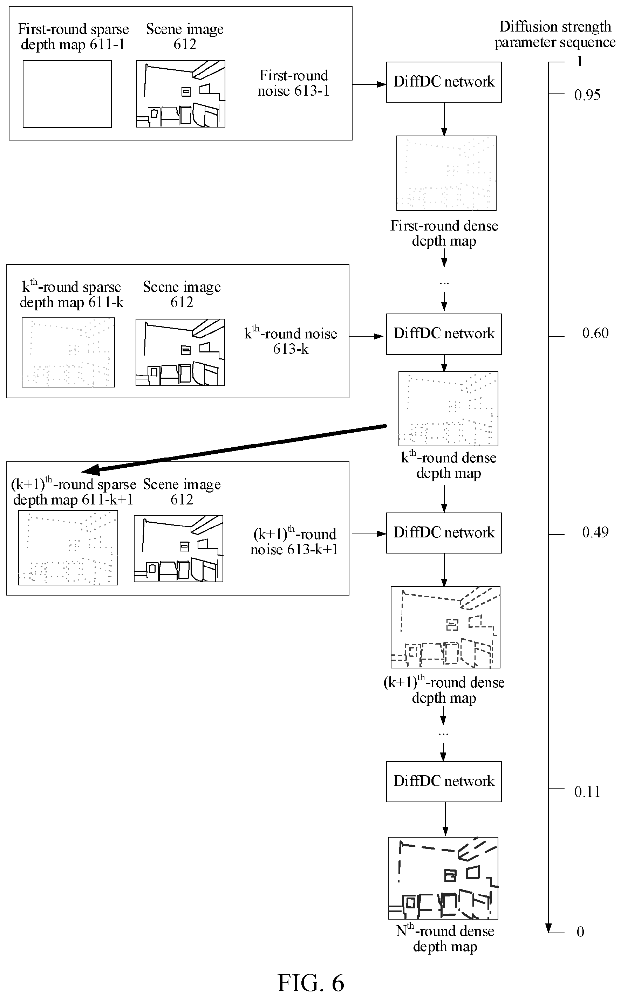

Referring to FIG. 6, FIG. 6 is a schematic diagram of a process of performing depth completion on an aggregated feature by diffusing the aggregated feature through a depth completion network via N rounds of iterations according to an exemplary embodiment of this application.

As shown in FIG. 6, for the first-round iteration, an input of a DiffDC network is the first-round aggregated feature obtained by aggregating features of a sparse depth map 611-1 and a scene image 612 and a noise (i.e., performing noising processing with the first-round noise 613-1).

Only as an example, the diffusion strength parameter adopted in the first-round iteration is 0.95.

Description will be made below by taking a $k^{th}$-round iteration as an example. In the $k^{th}$-round iteration, the computer device aggregates a scene feature of a scene image 612, a sparse depth feature of a $k^{th}$-round sparse depth map 611-k, and a $k^{th}$-round noise 613-k (i.e., performing nosing processing with the $k^{th}$-round noise 613-k), to obtain a $k^{th}$-round aggregated feature, where the $k^{th}$-round noise is randomly generated based on a Gaussian distribution.

For example, the value $\varepsilon$ of each pixel in a noisy image composed of the $k^{th}$-round noise is randomly determined based on a Gaussian distribution with a mean value of 0 and a standard deviation of 1. That is, $\varepsilon \sim G(0,1)$.

A $(k+1)^{th}$-round sparse depth map is a $k^{th}$-round dense depth map obtained through $k^{th}$-round depth completion processing, that is, a $k^{th}$-round sparse depth map 611-k is a $(k-1)^{th}$-round dense depth map generated by a previous-round iteration.

In some embodiments, the computer device performs depth completion on the $k^{th}$-round aggregated feature through diffusing the $k^{th}$-round aggregated feature by the depth completion network based on the $k^{th}$ diffusion strength parameter in the diffusion strength parameter sequence, to obtain a $k^{th}$-round depth completion feature, and performs image restoration based on the $k^{th}$-round depth completion feature to obtain a $k^{th}$-round dense depth map.

Only as an example, the diffusion strength parameter adopted in the $k^{th}$-round iteration is 0.60.

Similarly, in a $(k+1)^{th}$-round iteration, the computer device aggregates features of a scene image 612 and a $(k+1)^{th}$ sparse depth map 611-k+1 and a noise, performs noising processing with a $(k+1)^{th}$-round noise 613-k+1 (i.e., performing nosing processing with the $(k+1)^{th}$-round noise 613-k+1) to obtain a $(k+1)^{th}$-round aggregated feature, and performs depth completion on the through diffusing the $(k+1)^{th}$-round aggregated feature by the depth completion network to obtain a $(k+1)^{th}$-round depth completion feature, and performs image restoration based on the $(k+1)^{th}$-round depth completion feature to obtain a $(k+1)^{th}$-round dense depth map.

Only as an example, the diffusion strength parameter adopted in the $(k+1)^{th}$-round iteration is 0.49.

The $(k+1)^{th}$-round sparse depth map 611-k+1 is a $k^{th}$-round dense depth map generated in $k^{th}$-round iteration.

In some embodiments, by representing the scene image with $I_{ref}$, representing the first-round sparse depth map with $D_{sparse}$, representing the diffusion strength parameter with $t_i$, representing the dense depth map generated based on the diffusion strength parameter $t_i$ with $D_{t_i}$, representing the dense depth map generated based on the diffusion strength parameter $t_{i-1}$ with $D_{t_{i-1}}$, and representing the DiffDC network with f, the depth completion process through multiple rounds of iterations may be represented as the following formula:

$$D_{t_i} = f\left(D_{t_i}, D_{t_{i-1}}, I_{ref}, D_{sparse}, t_i\right).$$

In some embodiments, in the depth completion process through multiple rounds of iterations, the computer device uses $D_{t_{i-1}}$ as a prerequisite when the diffusion strength parameter is $t_i$ to compute $D_{t_i}$, till an $N^{th}$-round depth completion process, thus obtaining an $N^{th}$-round dense depth map as a final dense depth map.

Only as an example, the diffusion strength parameter adopted in the $N^{th}$-round iteration is 0.11.

In this embodiment, depth completion including N rounds of iterations is performed on the aggregated feature through the depth completion network. In each round of iteration, the dense depth map generated by the previous-round iteration is used as an input, and the diffusion strength parameter which sequentially decreases is adopted in each round of iteration, thus achieving the depth completion process from coarse to fine and improving the quality of depth completion.

In order to train the depth completion network, in some embodiments, the computer device may acquire a sample scene image, a sample sparse depth map, sample noise, and a sample depth map, aggregate features of the sample scene image and the sample sparse depth map, then perform noising processing with the sample noise, to obtain a sample aggregated feature, and input the sample aggregated feature into the depth completion network to obtain a sample depth completion feature, perform image restoration based on the sample depth completion feature to obtain a sample dense depth map, and uses the sample depth map as a supervision, determine a completion loss based on a difference between the sample dense depth map and the sample depth map, and train the depth completion network based on the completion loss.

In order to improve the training quality, in some embodiments, the computer device may also introduce a sample guidance map in the training process to reduce the diffusion randomness of the depth completion network.

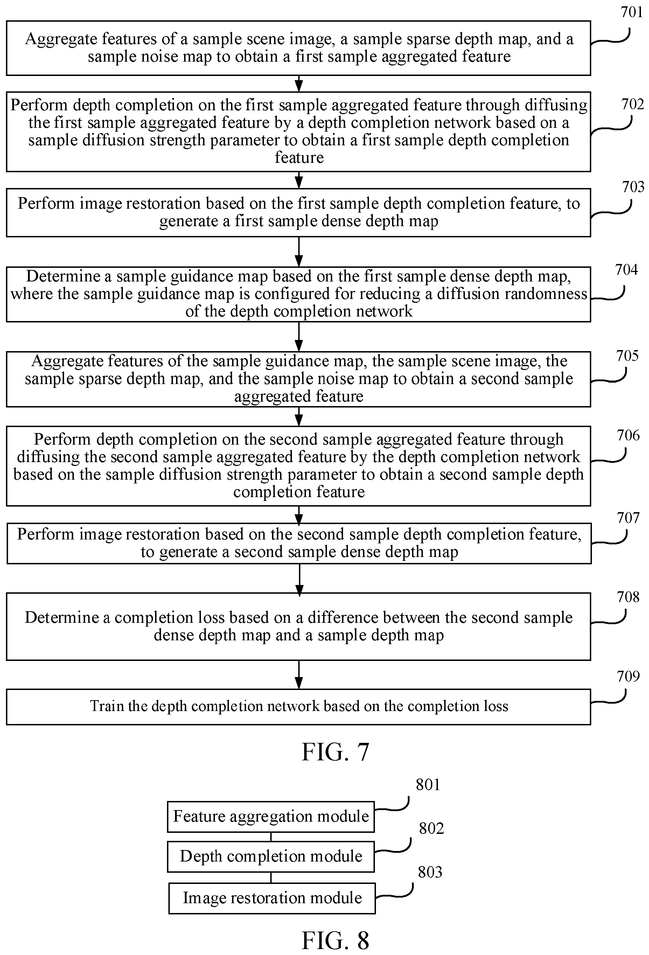

Referring to FIG. 7, FIG. 7 is a flowchart of training a depth completion network according to an exemplary embodiment of this application. The process includes the following operations:

Operation 701: Aggregate features of a sample scene image, a sample sparse depth map, and a sample noise map to obtain a first sample aggregated feature.

In regard with the mode of generating the sample noise map, in a possible implementation, the computer device may perform noising on the sample depth map by using Gaussian noise based on the sample diffusion strength parameter to obtain the sample noise map.

Exemplarily, by representing the sample noise map with $D_t$, representing the sample diffusion strength parameter with t, and representing the sample depth map with $D_{com}$, $D_t$ may be represented as the following formula:

$$D_t = \sqrt{\beta(t)}D_{com} + \sqrt{1 - \beta(t)}\varepsilon,$$

where $\beta(t) = e^{-10t2-10-4}$, and the value $\varepsilon$ of the random noise added to each pixel point is determined based on a Gaussian distribution with a mean value of 0 and a standard deviation of 1. That is, $\varepsilon{\sim}G(0,1)$.

In some embodiments, the first sample aggregated feature $F_{raw}1$ may be represented as the following formula:

$$F_{raw}1 = Concatenate(D_t, F_r, F_s),$$

where $D_t$ represents the sample noise map, $F_r$ represents the sample scene feature encoded based on the sample scene image, and $F_s$ represents the sample sparse depth feature encoded based on the sample sparse depth map.

Operation 702: Perform depth completion on the first sample aggregated feature through diffusing the first sample aggregated feature by a depth completion network based on a sample diffusion strength parameter to obtain a first sample depth completion feature.

Operation 703: Perform image restoration based on the first sample depth completion feature, to generate a first sample dense depth map.

Exemplarily, by representing the sample noise map with $D_t$, representing the sample diffusion strength parameter with t, representing the sample scene image with $I_{ref}$, representing the sample sparse depth map with $D_{sparse}$, and representing the DiffDC network with $f$, the first sample dense depth map may be represented as the following formula:

$$f\left(D_t, 0, I_{ref}, D_{sparse}, t\right).$$

Operation 704: Determine a sample guidance map based on the first sample dense depth map, where the sample guidance map is configured for reducing a diffusion randomness of the depth completion network.

In regard to the mode of determining the sample guidance map, in a possible implementation, a probability that the sample guidance map is assigned to the first sample dense depth map is the first probability, and a probability that the sample guidance map is assigned to a tensor with element values being zero is the second probability, and a sum of the first probability and the second probability is 1.

Exemplarily, the first probability and the second probability are both 50%. By representing the sample guidance map with $\widetilde{D_0}$, in the training process, $\widetilde{D_0}$ is assigned to $f(D_t, 0, I_{ref}, D_{sparse}, t)$ according to a probability of 50%, and is assigned to a tensor with the same shape as $D_{com}$ but element values being all 0 according to a possibility of other 50%.

Operation 705: Aggregate features of the sample guidance map, the sample scene image, the sample sparse depth map, and the sample noise map to obtain a second sample aggregated feature.

In some embodiments, the second sample aggregated feature $F_{raw}2$ may be represented as the following formula:

$$F_{raw}2 = Concatenate(D_t, F_r, F_s, \widetilde{D_0}),$$

where $D_t$ represents the sample noise map, $F_r$ represents the sample scene feature encoded based on the sample scene image, $F_s$ represents the sample sparse depth feature encoded based on the sample sparse depth map, and $\widetilde{D_0}$ represents the sample guidance map.

Operation 706: Perform depth completion on the second sample aggregated feature through diffusing the second sample aggregated feature by the depth completion network based on the sample diffusion strength parameter to obtain a second sample depth completion feature.

Operation 707: Perform image restoration based on the second sample depth completion feature, to generate a second sample dense depth map.

In some embodiments, the second sample dense depth map may be represented as the following formula:

$$f\left(D_t, \widetilde{D_0}, I_{ref}, D_{sparse}, t\right).$$

Operation 708: Determine a completion loss based on a difference between the second sample dense depth map and a sample depth map.

Exemplarily, by representing the completion loss with $L_{D_{com}}$, the completion loss may be computed through the following formula:

$$L_{D_{com}} = E_{\varepsilon \sim G(0,I), t \sim U(0,I)} \left\| f\left(D_t, \widetilde{D_0}, I_{ref}, D_{sparse}, t\right) - D_{com} \right\|^2;$$

$$D_t = \sqrt{\beta(t)} D_{com} + \sqrt{1 - \beta(t)} \varepsilon,$$

where G is a Gaussian distribution, U is a uniform distribution, $\beta(t) = e^{-10t^2 - 10^{-4}}$, and f is a DiffDC network.

Operation 709: Train the depth completion network based on the completion loss.

Only as an example, the computer device may train the depth completion network through a gradient descent method or any other training mode.

In this embodiment, by determining the second sample dense depth map based on the sample guidance map, it can be configured for guiding the diffusion process of the depth completion network and reduce the diffusion randomness of the depth completion network, that is, a previous computation result is used as a reference in a current diffusion process, so that the current calculation process does not deviate too much from the previous calculation result, thus achieving a better training effect.

In some embodiments, the depth map completion method provided in this embodiment of this application may be applied to various scenarios, such as three-dimensional modeling scenario, autonomous driving scenario, 3D printing scenario, and so on.

**For the three-dimensional modeling scenario:**

In some embodiment, in the three-dimensional modeling scenario, only a sparse depth map corresponding to a three-dimensional scene can be acquired through a depth camera. Therefore, in order to improve the efficiency and accuracy of three-dimensional modeling, the computer device may firstly generate a dense depth map based on the sparse depth map, and then use the dense depth map in a three-dimensional modeling process.

In some embodiments, the computer device firstly acquires a scene image corresponding to the three-dimensional modeling scenario obtained by a camera device through photographing, as well as a sparse depth map acquired by a depth camera, then performs aggregation on features of the scene image and the sparse depth map and a noise, to obtain an aggregated feature, performs depth completion on the aggregated feature through diffusing the aggregated feature by a depth completion network based on a diffusion strength parameter to obtain a depth completion feature, and performs image restoration based on the depth completion feature to obtain a dense depth map.

In some embodiments, in order to improve the depth completion accuracy, the computer device may determine a diffusion strength parameter sequence, the diffusion strength parameter sequence includes N diffusion strength parameters, a $(k+1)^{th}$ diffusion strength parameter is smaller than a $k^{th}$ diffusion strength parameter in the diffusion strength parameter sequence, and then the aggregated feature is diffused and depth-completed based on the diffusion strength parameters in the diffusion strength parameter sequence through the depth completion network via N rounds of iterations to obtain a depth completion feature.

For the generation process of a $k^{th}$-round dense depth map, in a possible implementation, the computer device aggregates features of the scene image and a $k^{th}$-round sparse depth map and a $k^{th}$-round noise, to obtain a $k^{th}$-round aggregated feature, where a $(k+1)^{th}$-round sparse depth map is a $k^{th}$-round dense depth map obtained through $k^{th}$-round depth completion processing , and the $k^{th}$-round noise is randomly generated based on a Gaussian distribution. Further, the computer device performs depth completion on the $k^{th}$-round aggregated feature through diffusing the $k^{th}$-round aggregated feature by the depth completion network based on the $k^{th}$ diffusion strength parameter in the diffusion strength parameter sequence to obtain a $k^{th}$-round depth completion feature, and performs image restoration based on the $k^{th}$-round depth completion feature to obtain a $k^{th}$-round dense depth map.

In some embodiments, in order to fully learn the image feature and improve the depth completion efficiency, the depth completion network may include a downsampling diffusion subnetwork and an upsampling diffusion subnetwork. In a possible implementation, the computer device firstly performs downsampling diffusion on the aggregated feature by the downsampling diffusion subnetwork based on the diffusion strength parameter to obtain a downsampling depth feature, and then performs upsampling diffusion on the downsampling depth feature by the upsampling diffusion subnetwork based on the diffusion strength parameter to obtain a depth completion feature.

In some embodiments, in order to improve the sampling accuracy, the downsampling diffusion subnetwork may include n downsampling layers, and the upsampling diffusion subnetwork may include n upsampling layers. In a possible implementation, the computer device performs downsampling diffusion on the aggregated feature by the first downsampling layer based on the diffusion strength parameter to obtain the first downsampling feature, then performs downsampling diffusion on an $i^{th}$ downsampling feature by an $(i+1)^{th}$ downsampling layer based on the diffusion strength parameter to obtain an $(i+1)^{th}$ downsampling feature, and then uses an $n^{th}$ downsampling feature outputted by an $n^{th}$ downsampling layer as the downsampling depth feature. Further, the computer device performs upsampling diffusion on the downsampling depth feature by the first upsampling layer based on the diffusion strength parameter to obtain the first upsampling feature, then performs upsampling diffusion on an $i^{th}$ upsampling feature by an $(i+1)^{th}$ upsampling layer based on the diffusion strength parameter to obtain an $(i+1)^{th}$ upsampling feature, and finally determines an $n^{th}$ upsampling feature outputted by an $n^{th}$ upsampling layer as the depth completion feature.

In some embodiments, in regard to the downsampling diffusion process of a single downsampling layer, in a possible implementation, the computer device performs downsampling on the $i^{th}$ downsampling feature to obtain an intermediate downsampling feature, fuses the diffusion strength feature and the intermediate downsampling feature to generate a fused downsampling feature, where the diffusion strength feature is obtained based on feature extraction on the diffusion strength parameter, and then fuses the intermediate downsampling feature and the fused downsampling feature to generate an $(i+1)^{th}$ downsampling feature.

In some embodiments, in regard to the upsampling diffusion process of a single upsampling layer, in a possible implementation, the computer device performs upsampling on the $i^{th}$ upsampling feature to obtain an intermediate upsampling feature, fuses the diffusion strength feature and the intermediate upsampling feature to generate a fused upsampling feature, where the diffusion strength feature is obtained based on feature extraction on the diffusion strength parameter, and then fuses the intermediate upsampling feature and the fused upsampling feature to generate an $(i+1)^{th}$ upsampling feature.

In a possible implementation, the computer device may also fuse the $i^{th}$ upsampling feature and an $(n-i)^{th}$ downsampling feature to obtain an $i^{th}$ fused feature, and then perform upsampling diffusion on the $i^{th}$ fused feature by the $(i+1)^{th}$ upsampling layer based on the diffusion strength parameter to obtain an $(i+1)^{th}$ upsampling feature.

In some embodiments, in regard to the process of obtaining the aggregated feature, in a possible implementation, the computer device firstly encodes the feature of the sparse depth map through the first encoder to obtain a sparse depth feature, and encodes the feature of the scene image through the second encoder to obtain a scene feature, aggregates the scene feature and the sparse depth feature and a noise to obtain an aggregated feature, where dimensions of the scene feature, the sparse depth feature, and the noise are the same as each other.

**For the autonomous driving scenario:**

In some embodiment, in the autonomous driving scenario, only a sparse depth map corresponding to a driving scene can be acquired through devices such as a laser radar. Therefore, in order to improve the efficiency and accuracy of autonomous driving, the computer device may firstly generate a dense depth map based on the sparse depth map, and then use the dense depth map in an autonomous driving process.

In some embodiments, the computer device firstly acquires a driving road condition image obtained by a camera device through photographing, as well as a sparse depth map corresponding to the driving road condition image, then performs aggregation on features of the driving road condition image and the sparse depth map and a noise to obtain an aggregated feature, performs depth completion on the aggregated feature through diffusing the aggregated feature by a depth completion network based on a diffusion strength parameter to obtain a depth completion feature, and performs image restoration based on the depth completion feature to obtain a dense depth map.

In some embodiments, in order to improve the depth completion accuracy, the computer device may determine a diffusion strength parameter sequence, the diffusion strength parameter sequence includes N diffusion strength parameters, a $(k+1)^{th}$ diffusion strength parameter is smaller than a $k^{th}$ diffusion strength parameter in the diffusion strength parameter sequence, and then the aggregated feature is diffused and completed based on the diffusion strength parameters in the diffusion strength parameter sequence through the depth completion network via N rounds of iterations to obtain a depth completion feature.

For the generation process of a $k^{th}$-round dense depth map, in a possible implementation, the computer device aggregates features of the driving road condition image and a $k^{th}$-round sparse depth map and a $k^{th}$-round noise to obtain a $k^{th}$-round aggregated feature, where a $(k+1)^{th}$-round sparse depth map is a $k^{th}$-round dense depth map obtained through $k^{th}$-round depth completion processing, and the $k^{th}$-round noise is randomly generated based on a Gaussian distribution. Further, the computer device performs depth completion on the $k^{th}$-round aggregated feature through diffusing the $k^{th}$-round aggregated feature by the depth completion network based on the $k^{th}$ diffusion strength parameter in the diffusion strength parameter sequence to obtain a $k^{th}$-round depth completion feature, and performs image restoration based on the $k^{th}$-round depth completion feature to obtain a $k^{th}$-round dense depth map.

In some embodiments, in order to fully learn the image feature and improve the depth completion efficiency, the depth completion network may include a downsampling diffusion subnetwork and an upsampling diffusion subnetwork. In a possible implementation, the computer device firstly performs downsampling diffusion on the aggregated feature by the downsampling diffusion subnetwork based on the diffusion strength parameter to obtain a downsampling depth feature, and then performs upsampling diffusion on the downsampling depth feature by the upsampling diffusion subnetwork based on the diffusion strength parameter to obtain a depth completion feature.

In some embodiments, in order to improve the sampling accuracy, the downsampling diffusion subnetwork may include n downsampling layers, and the upsampling diffusion subnetwork may include n upsampling layers. In a possible implementation, the computer device performs downsampling diffusion on the aggregated feature by the first downsampling layer based on the diffusion strength parameter to obtain the first downsampling feature, then performs downsampling diffusion on an $i^{th}$ downsampling feature by an $(i+1)^{th}$ downsampling layer based on the diffusion strength parameter to obtain an $(i+1)^{th}$ downsampling feature, and then uses an $n^{th}$ downsampling feature outputted by an $n^{th}$ downsampling layer as the downsampling depth feature. Further, the computer device performs upsampling diffusion on the downsampling depth feature by the first upsampling layer based on the diffusion strength parameter to obtain the first upsampling feature, then performs upsampling diffusion on an $i^{th}$ upsampling feature by an $(i+1)^{th}$ upsampling layer based on the diffusion strength parameter to obtain an $(i+1)^{th}$ upsampling feature, and finally determines an $n^{th}$ upsampling feature outputted by an $n^{th}$ upsampling layer as the depth completion feature.

In some embodiments, in regard to the downsampling diffusion process of a single downsampling layer, in a possible implementation, the computer device performs downsampling on the $i^{th}$ downsampling feature to obtain an intermediate downsampling feature, fuses the diffusion strength feature and the intermediate downsampling feature to generate a fused downsampling feature, where the diffusion strength feature is obtained based on feature extraction on the diffusion strength parameter, and then fuses the intermediate downsampling feature and the fused downsampling feature to generate an $(i+1)^{th}$ downsampling feature.

In some embodiments, in regard to the upsampling diffusion process of a single upsampling layer, in a possible implementation, the computer device performs upsampling on the $i^{th}$ upsampling feature to obtain an intermediate upsampling feature, fuses the diffusion strength feature and the intermediate upsampling feature to generate a fused upsampling feature, where the diffusion strength feature is obtained based on feature extraction on the diffusion strength parameter, and then fuses the intermediate upsampling feature and the fused upsampling feature to generate an $(i+1)^{th}$ upsampling feature.

In a possible implementation, the computer device may also fuse the $i^{th}$ upsampling feature and an $(n-i)^{th}$ downsampling feature to obtain an $i^{th}$ fused feature, and then perform upsampling diffusion on the $i^{th}$ fused feature by the $(i+1)^{th}$ upsampling layer based on the diffusion strength parameter to obtain an $(i+1)^{th}$ upsampling feature.

In some embodiments, in regard to the process of obtaining the aggregated feature, in a possible implementation, the computer device firstly encodes the feature of the sparse depth map through the first encoder to obtain a sparse depth feature, and encodes the feature of the driving road condition image through the second encoder to obtain a driving scene feature, aggregates the driving scene feature and the sparse depth feature, and performs noising processing with a noise to obtain an aggregated feature, where dimensions of the driving scene feature, the sparse depth feature, and the noise are consistent.

Referring to FIG. 8, FIG. 8 is a structural block diagram of a depth map completion apparatus according to an exemplary embodiment of this application. The apparatus includes:

a feature aggregation module 801, configured to a scene feature of of a scene image, a sparse depth feature of a sparse depth map and a noise, to obtain an aggregated feature, where the sparse depth map comprises depth information of a proper subset of pixels from the scene image;

a depth completion module 802, configured to perform depth completion on the aggregated feature through diffusing the aggregated feature by a depth completion network based on a diffusion strength parameter to obtain a depth completion feature, where the diffusion strength parameter is configured for controlling a reverse diffusion strength in the depth completion; and

an image restoration module 803, configured to perform image restoration based on the depth completion feature to obtain a dense depth map, where a depth information completeness of the dense depth map is higher than a depth information completeness of the sparse depth map.

In some embodiments, the apparatus further includes an iteration module configured to:

determine a diffusion strength parameter sequence, where the diffusion strength parameter sequence includes N diffusion strength parameters, and a $(k+1)^{th}$ diffusion strength parameter is smaller than a $k^{th}$ diffusion strength parameter in the diffusion strength parameter sequence, where N is a positive integer and k is a positive integer.

In some embodiments, the depth completion module 802 is configured to:

perform depth completion on the aggregated feature through diffusing the aggregated feature by the depth completion network based on the diffusion strength parameter in the diffusion strength parameter sequence via N rounds of iterations to obtain the depth completion feature.

In some embodiments, the feature aggregation module 801 is configured to:

aggregate the scene feature of the scene image, a sparse depth feature of a $k^{th}$-round sparse depth map and a $k^{th}$-round noise to obtain a $k^{th}$-round aggregated feature, where a $(k+1)^{th}$-round sparse depth map is a $k^{th}$-round dense depth map obtained through $k^{th}$-round depth completion processing, and the $k^{th}$-round noise is randomly generated based on a Gaussian distribution.

In some embodiments, the depth completion module 802 is configured to:

perform depth completion on the $k^{th}$-round aggregated feature through diffusing the aggregated feature by the depth completion network based on the $k^{th}$ diffusion strength parameter in the diffusion strength parameter sequence to obtain a $k^{th}$-round depth completion feature.

In some embodiments, the image restoration module 803 is configured to:

perform image restoration based on the $k^{th}$-round depth completion feature to obtain the $k^{th}$-round dense depth map.

In some embodiments, the depth completion network includes a downsampling diffusion subnetwork and an upsampling diffusion subnetwork, and the depth completion module 802 is configured to:

perform downsampling diffusion on the aggregated feature by the downsampling diffusion subnetwork based on the diffusion strength parameter to obtain a downsampling depth feature; and

perform upsampling diffusion on the downsampling depth feature by the upsampling diffusion subnetwork based on the diffusion strength parameter to obtain the depth completion feature.

In some embodiments, the downsampling diffusion subnetwork includes n downsampling layers, and the upsampling diffusion subnetwork includes n upsampling layers, where n is a positive integer; the depth completion module 802 is configured to:

perform downsampling diffusion on the aggregated feature by the first downsampling layer based on the diffusion strength parameter to obtain the first downsampling feature;

perform downsampling diffusion on an $i^{th}$ downsampling feature by an $(i+1)^{th}$ downsampling layer based on the diffusion strength parameter to obtain an $(i+1)^{th}$ downsampling feature, where i is a positive integer; and

determine an $n^{th}$ downsampling feature outputted by an $n^{th}$ downsampling layer as the downsampling depth feature;

perform upsampling diffusion on the downsampling depth feature by the first upsampling layer based on the diffusion strength parameter to obtain a first upsampling feature;

perform upsampling diffusion on an $i^{th}$ upsampling feature by an $(i+1)^{th}$ upsampling layer based on the diffusion strength parameter to obtain an $(i+1)^{th}$ upsampling feature; and

determine an $n^{th}$ upsampling feature outputted by an $n^{th}$ upsampling layer as the depth completion feature.

In some embodiments, the depth completion module 802 is configured to:

perform downsampling on the $i^{th}$ downsampling feature to obtain an intermediate downsampling feature;

fuse the diffusion strength feature and the intermediate downsampling feature to generate a fused downsampling feature, where the diffusion strength feature is obtained based on feature extraction on the diffusion strength parameter; and

fuse the intermediate downsampling feature and the fused downsampling feature to generate the $(i+1)^{th}$ downsampling feature.

In some embodiments, the depth completion module 802 is configured to:

perform upsampling on the $i^{th}$ upsampling feature to obtain an intermediate upsampling feature;

fuse the diffusion strength feature and the intermediate upsampling feature to generate a fused upsampling feature, where the diffusion strength feature is obtained based on feature extraction on the diffusion strength parameter; and

fuse the intermediate upsampling feature and the fused upsampling feature to generate the $(i+1)^{th}$ upsampling feature.

In some embodiments, the depth completion module 802 is configured to:

fuse the $i^{th}$ upsampling feature and an $(n-i)^{th}$ downsampling feature to obtain an $i^{th}$ fused feature; and

perform upsampling diffusion on the $i^{th}$ fused feature by the $(i+1)^{th}$ upsampling layer based on the diffusion strength parameter to obtain the $(i+1)^{th}$ upsampling feature.

In some embodiments, the feature aggregation module 801 is configured to:

encode the feature of the sparse depth map through a first encoder to obtain the sparse depth feature;

encode the feature of the scene image through a second encoder to obtain the scene feature; and

aggregate the scene feature, the sparse depth feature and the noise, to obtain the aggregated feature, where dimensions of the scene feature, the sparse depth feature, and the noise are the same as each other.

In some embodiments, the apparatus further includes a training module configured to:

aggregate features of a sample scene image, a sample sparse depth map, and a sample noise map to obtain a first sample aggregated feature;

performing depth completion on the first sample aggregated feature through diffusing the first sample aggregated feature by the depth completion network based on a sample diffusion strength parameter to obtain a first sample depth completion feature;

perform image restoration based on the first sample depth completion feature, to generate a first sample dense depth map;

determine a sample guidance map based on the first sample dense depth map, where the sample guidance map is configured for reducing a diffusion randomness of the depth completion network;

aggregate features of the sample guidance map, the sample scene image, the sample sparse depth map, and the sample noise map, to obtain a second sample aggregated feature;

performing depth completion on the second sample aggregated feature through diffusing the second sample aggregated feature by the depth completion network based on the sample diffusion strength parameter to obtain the second sample depth completion feature;

perform image restoration based on the second sample depth completion feature, to generate a second sample dense depth map;

determine a completion loss based on a difference between the second sample dense depth map and a sample depth map; and

train the depth completion network based on the completion loss.

In some embodiments, a probability that the sample guidance map is assigned to the first sample dense depth map is a first probability, and a probability that the sample guidance map is assigned to a tensor with all element values being zero is a second probability, and a sum of the first probability and the second probability is 1.

In some embodiments, the training module is configured to:
perform noising processing on the sample depth map by using a Gaussian noise based on the diffusion strength parameter to obtain the sample noise map.

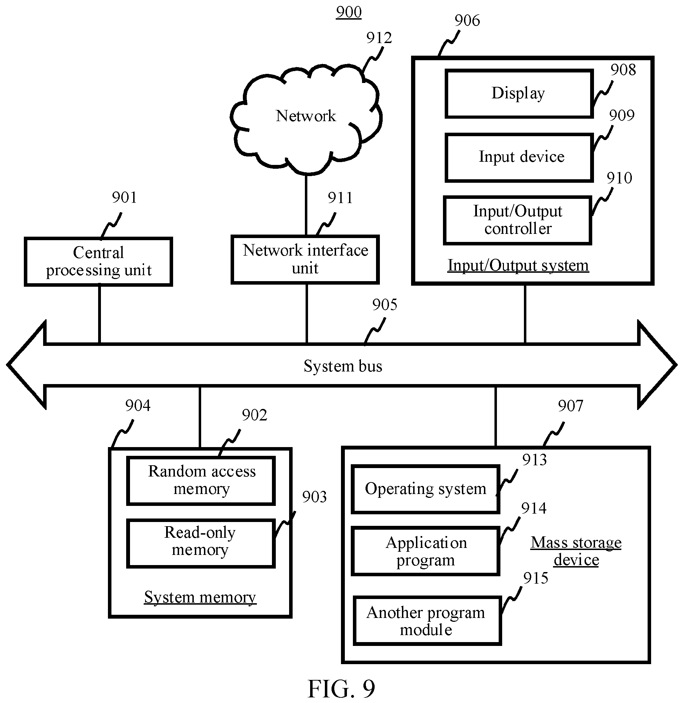

Refer to FIG. 9, FIG. 9 is a schematic diagram of a structure of a computer device according to an exemplary embodiment of this application.

Specifically, the computer device 900 includes a central processing unit (CPU) 901, a system memory 904 including a random access memory 902 and a read-only memory 903, and a system bus 905 connecting the system memory 904 and the central processing unit 901. The server 900 further includes a basic input/output (I/O) system 906 assisting in information transmission between components in the computer, and a mass storage device 907 configured to store an operating system 913, an application program 914, and another program module 915.

The basic I/O system 906 includes a display 908 configured to display information and an input device 909 such as a mouse or a keyboard that is configured to input information by a user. The display 908 and the input device 909 are both connected to the CPU 901 through an input/output controller 910 connected to the system bus 905. The basic I/O system 906 may further include the input/output controller 910 configured to receive and process inputs from multiple other devices such as a keyboard, a mouse, and an electronic stylus. Similarly, the input/output controller 910 further provides an output to a display screen, a printer, or another type of output device.

The mass storage device 907 is connected to the CPU 901 through a mass storage controller (not shown) connected to the system bus 905. The mass storage device 907 and a computer-readable medium associated therewith provide non-volatile storage for the computer device 900. That is, the mass storage device 907 may include the computer-readable medium (not shown) such as a hard disc or a drive.

Without losing generality, the computer-readable medium may include a computer storage medium and a communication medium. The computer storage medium includes volatile, non-volatile media, removable and non-removable media implemented by using any method or technology configured for storing information such as computer-readable instructions, data structures, program modules, or other data. The computer storage medium includes a random access memory (RAM), a read only memory (ROM), a flash memory or another solid-state storage technology, a compact disc read-only memory (CD-ROM), a digital versatile disc (DVD) or another optical memory, a magnetic cassette, a magnetic tape, a magnetic disc memory, or another magnetic storage device. Certainly, those skilled in the art may learn that the computer storage medium is not limited to the foregoing several types. The system memory 904 and the mass storage device 907 may be collectively referred to as a memory.

The memory stores one or more programs, the one or more programs are configured to be executed by one or more CPUs 901, the one or more programs include instructions configured for implementing the foregoing methods, and the CPU 901 executes the one or more programs to implement the method provided in each method embodiment described above.

According to the embodiments of this application, the computer device 900 may further be connected, through a network such as the Internet, to a remote computer on the network to run. That is, the computer device 900 may be connected to a network 912 by using a network interface unit 911 connected to the system bus 905, or may be connected to another type of network or a remote computer system (not shown) by using a network interface unit 911.

The memory further includes one or more programs, the one or more programs is stored in the memory, and the one or more programs includes operations performed by the computer device in the method according to the embodiment of this application.

An embodiment of this application further provides a computer-readable storage medium, having at least one instruction stored therein. The at least one instruction is loaded and executed by a processor to implement the method described in any of the above embodiments.

In some embodiments, the computer-readable storage medium may include an ROM, an RAM, a solid state drive (SSD), an optical disc, or the like. The RAM may include a resistance random access memory (ReRAM) and a dynamic random access memory (DRAM).

An embodiment of this application provides a computer program product. The computer program product includes computer instructions. The computer instructions are stored in a computer-readable storage medium. The processor of the computer device reads the computer instructions from the computer-readable storage medium, and the processor executes the computer instructions, so that the computer device performs the method in the foregoing embodiment.

Those skilled in the art may understand that all or some of the operations of the embodiments may be implemented by hardware, or may be implemented by a program instructing relevant hardware. The program may be stored in a computer-readable storage medium. The storage medium may be a read-only memory, a magnetic disc, an optical disc, or the like.

The above descriptions are merely exemplary embodiments of this application, and are not intended to limit this application. Any modification, equivalent replacement, or improvement made within the spirit and principle of this application still fall within the scope of protection of this application.

**Claims**

1. A method for generating a depth map, the method being executable by a computer device and comprising:

   aggregating a scene feature of a scene image, a sparse depth feature of a sparse depth map and a noise to obtain an aggregated feature, the sparse depth map comprising depth information of a proper subset of pixels from the scene image;
   performing depth completion on the aggregated feature through diffusing the aggregated feature by a depth completion network based on a diffusion strength parameter to obtain a depth completion feature, the diffusion strength parameter being configured for controlling a reverse diffusion strength of the depth completion; and
   performing image restoration based on the depth completion feature to obtain a dense depth map with a higher depth information completeness than the sparse depth map.

2. The method according to claim 1, further comprising:

   determining a diffusion strength parameter sequence, the diffusion strength parameter sequence comprising N diffusion strength parameters, and a $(k+1)^{th}$ diffusion strength parameter being smaller than a $k^{th}$ diffusion strength parameter in the diffusion strength parameter sequence, N being a positive integer and k being a positive integer; and
   the performing depth completion on the aggregated feature through diffusing the aggregated feature by a depth completion network based on a diffusion strength parameter to obtain a depth completion feature comprising:
   performing the depth completion on the aggregated feature through diffusing the aggregated feature by the depth completion network based on the diffusion strength parameters in the diffusion strength parameter sequence via N rounds of iterations, to obtain the depth completion feature.

3. The method according to claim 2, wherein the aggregating a scene feature of a scene image, a sparse depth feature of a sparse depth map and a noise to obtain an aggregated feature comprises:

   aggregating the scene feature of the scene image, a sparse depth feature of a $k^{th}$-round sparse depth map and a $k^{th}$-round noise to obtain a $k^{th}$-round aggregated feature, a $(k+1)^{th}$-round sparse depth map being a $k^{th}$-round dense depth map obtained through $k^{th}$-round depth completion processing, and the $k^{th}$-round noise being randomly generated based on a Gaussian distribution;

the performing depth completion on the aggregated feature through diffusing the aggregated feature by the depth completion network based on the diffusion strength parameters in the diffusion strength parameter sequence via N rounds of iterations to obtain the depth completion feature comprises:

performing the depth completion on the $k^{th}$-round aggregated feature through diffusing the $k^{th}$-round aggregated feature by the depth completion network based on the $k^{th}$ diffusion strength parameter in the diffusion strength parameter sequence to obtain a $k^{th}$-round depth completion feature; and

the performing image restoration based on the depth completion feature to obtain a dense depth map comprises:

performing image restoration based on the $k^{th}$-round depth completion feature to obtain the $k^{th}$-round dense depth map.

4. The method according to any one of claims 1 to 3, wherein the depth completion network comprises a downsampling diffusion subnetwork and an upsampling diffusion subnetwork; and

the performing depth completion on the aggregated feature through diffusing the aggregated feature by a depth completion network based on a diffusion strength parameter to obtain a depth completion feature comprises:

performing downsampling diffusion on the aggregated feature by the downsampling diffusion subnetwork based on the diffusion strength parameter to obtain a downsampling depth feature; and

performing upsampling diffusion on the downsampling depth feature by the upsampling diffusion subnetwork based on the diffusion strength parameter to obtain the depth completion feature.

5. The method according to claim 4, wherein the downsampling diffusion subnetwork comprises n downsampling layers, and the upsampling diffusion subnetwork comprises n upsampling layers, n being a positive integer;

the performing downsampling diffusion on the aggregated feature by the downsampling diffusion subnetwork based on the diffusion strength parameter to obtain a downsampling depth feature comprises:

performing downsampling diffusion on the aggregated feature by the first downsampling layer based on the diffusion strength parameter to obtain a first downsampling feature;

performing downsampling diffusion on an $i^{th}$ downsampling feature by an $(i+1)^{th}$ downsampling layer based on the diffusion strength parameter to obtain an $(i+1)^{th}$ downsampling feature, i being a positive integer; and

determining an $n^{th}$ downsampling feature outputted by an $n^{th}$ downsampling layer as the downsampling depth feature; and

the performing upsampling diffusion on the downsampling depth feature by the upsampling diffusion subnetwork based on the diffusion strength parameter to obtain the depth completion feature comprises:

performing upsampling diffusion on the downsampling depth feature by the first upsampling layer based on the diffusion strength parameter to obtain a first upsampling feature;

performing upsampling diffusion on an $i^{th}$ upsampling feature by an $(i+1)^{th}$ upsampling layer based on the diffusion strength parameter to obtain an $(i+1)^{th}$ upsampling feature; and

determining an $n^{th}$ upsampling feature outputted by an $n^{th}$ upsampling layer as the depth completion feature.

6. The method according to claim 5, wherein the performing downsampling diffusion on an $i^{th}$ downsampling feature by an $(i+1)^{th}$ downsampling layer based on the diffusion strength parameter to obtain an $(i+1)^{th}$ downsampling feature comprises:

performing downsampling on the $i^{th}$ downsampling feature to obtain an intermediate downsampling feature;

fusing a diffusion strength feature and the intermediate downsampling feature to generate a fused downsampling feature, the diffusion strength feature being obtained based on feature extraction on the diffusion strength parameter; and

fusing the intermediate downsampling feature and the fused downsampling feature to generate the $(i+1)^{th}$ downsampling feature.

7. The method according to claim 5, wherein the performing upsampling diffusion on an $i^{th}$ upsampling feature by an $(i+1)^{th}$ upsampling layer based on the diffusion strength parameter to obtain an $(i+1)^{th}$ upsampling feature comprises:

performing upsampling on the $i^{th}$ upsampling feature to obtain an intermediate upsampling feature;

fusing a diffusion strength feature and the intermediate upsampling feature to generate a fused upsampling feature, the diffusion strength feature being obtained based on feature extraction on the diffusion strength parameter; and

fusing the intermediate upsampling feature and the fused upsampling feature to generate the $(i+1)^{th}$ upsampling feature.

8. The method according to claim 5, wherein the performing upsampling diffusion on an $i^{th}$ upsampling feature by an $(i+1)^{th}$ upsampling layer based on the diffusion strength parameter to obtain an $(i+1)^{th}$ upsampling feature comprises:

fusing the $i^{th}$ upsampling feature and an $(n-i)^{th}$ downsampling feature to obtain an $i^{th}$ fused feature; and
performing upsampling diffusion on the $i^{th}$ fused feature by the $(i+1)^{th}$ upsampling layer based on the diffusion strength parameter to obtain the $(i+1)^{th}$ upsampling feature.

9. The method according to any one of claims 1 to 8, wherein the aggregating a scene feature of a scene image, a sparse depth feature of a sparse depth map and a noise to obtain an aggregated feature comprises:

encoding the feature of the sparse depth map through a first encoder to obtain the sparse depth feature;
encoding the feature of the scene image through a second encoder to obtain the scene feature; and
aggregating the scene feature, the sparse depth feature and the noise, to obtain the aggregated feature, dimensions of the scene feature, the sparse depth feature, and the noise being the same as each other.

10. The method according to any one of claims 1 to 9, further comprising:

aggregating features of a sample scene image, a sample sparse depth map, and a sample noise map to obtain a first sample aggregated feature;
performing depth completion on the first sample aggregated feature through diffusing the first sample aggregated feature by the depth completion network based on a sample diffusion strength parameter, to obtain a first sample depth completion feature;
performing image restoration based on the first sample depth completion feature, to generate a first sample dense depth map;
determining a sample guidance map based on the first sample dense depth map, the sample guidance map being configured for reducing a diffusion randomness of the depth completion network;
aggregating features of the sample guidance map, the sample scene image, the sample sparse depth map, and the sample noise map, to obtain a second sample aggregated feature;
performing depth completion on the second sample aggregated feature through diffusing the second sample aggregated feature by the depth completion network based on the sample diffusion strength parameter, to obtain a second sample depth completion feature;
performing image restoration based on the second sample depth completion feature, to generate a second sample dense depth map;
determining a completion loss based on a difference between the second sample dense depth map and a sample depth map; and
training the depth completion network based on the completion loss.

11. The method according to claim 10, wherein a probability that the sample guidance map is assigned to the first sample dense depth map is a first probability, and a probability that the sample guidance map is assigned to a tensor with all element values being zero is a second probability, and a sum of the first probability and the second probability is 1.

12. The method according to claim 10, wherein the method further comprises:
performing noising processing on the sample depth map by using a Gaussian noise based on the diffusion strength parameter to obtain the sample noise map.

13. An apparatus for generating a depth map, comprising:

a feature aggregation module, configured to aggregate a scene feature of a scene image, a sparse depth feature of a sparse depth map and a noise, to obtain an aggregated feature, the sparse depth map comprising depth information of a proper subset of pixels from the scene image;
a depth completion module, configured to performing depth completion on the aggregated feature through diffusing the aggregated feature by a depth completion network based on a diffusion strength parameter to obtain a depth completion feature, the diffusion strength parameter being configured for controlling a reverse diffusion strength of the depth completion; and

an image restoration module, configured to perform image restoration based on the depth completion feature to obtain a dense depth map with a higher depth information completeness than the sparse depth map.

14. A computer device, comprising a processor and a memory, the memory having at least one computer instruction stored therein, the at least one computer instruction being loaded and executed by the processor to implement the depth map completion method according to any one of claims 1 to 12.

15. A computer-readable storage medium, having at least one computer instruction stored therein, the at least one computer instruction being loaded and executed by a processor to implement the depth map completion method according to any one of claims 1 to 12.

16. A computer program product, comprising computer instructions, the computer instructions being stored in a computer-readable storage medium, a processor of a computer device reading the computer instructions from the computer-readable storage medium, and the processor executing the computer instructions to cause the computer device to implement the depth map completion method according to any one of claims 1 to 12.

FIG. 1

| | |
|---|---|
| Aggregate a scene feature of a scene image, a sparse depth feature of a sparse depth map and a noise, to obtain an aggregated feature, where the sparse depth map includes depth information of a proper subset of pixels from the scene image | 201 |
| Perform depth completion on the aggregated feature through diffusing the aggregated feature by a depth completion network based on a diffusion strength parameter to obtain a depth completion feature, where the diffusion strength parameter is configured for controlling a reverse diffusion strength of the depth completion | 202 |
| Perform image restoration based on the depth completion feature to obtain a dense depth map, where a depth information completeness of the dense depth map is higher than a depth information completeness of the sparse depth map | 203 |

FIG. 2

Sparse depth map
311

Scene image 312

Diffusion strength
parameter 314

First encoder
321

Second encoder
322

Sparse depth feature 331

Diffusion strength feature 334

Scene feature 332

Noise 313 → D0

$F_D^0$

D1

$F_D^1$

D2

$F_D^2$

D3

$F_D^3$

mid

$F_{mid}$

U0

$F_U^0$

U1

$F_U^1$

U2

$F_U^2$

U3

$F_U^3$

Depth
completion
feature 351

Dense depth map
361

Downsampling diffusion
subnetwork 341

Upsampling diffusion
subnetwork 342

FIG. 3

| Diffusion strength feature 411 | → | $B_1$ | | $F_1$ |

| $i^{th}$ downsampling feature 412 | → | Sample (Downsampling) |

intermediate downsampling feature ($F_{sam}$) 421

$B_0$ → $F_0$

$B_2$ → fused downsampling feature ($F_2$) 422

$B_3$ → $F_3$ → (i+1)$^{th}$ downsampling feature 431

**FIG. 4**

| Diffusion strength feature 511 | → | $B_1$ | | $F_1$ |

| $i^{th}$ upsampling feature 512 | → | Sample (Upsampling) |

intermediate upsampling feature ($F_{sam}$) 521

$B_0$ → $F_0$

$B_2$ → Fused upsampling feature ($F_2$) 522

$B_3$ → $F_3$ → (i+1)$^{th}$ upsampling feature 531

**FIG. 5**

FIG. 6

Aggregate features of a sample scene image, a sample sparse depth map, and a sample noise map to obtain a first sample aggregated feature — 701

Perform depth completion on the first sample aggregated feature through diffusing the first sample aggregated feature by a depth completion network based on a sample diffusion strength parameter to obtain a first sample depth completion feature — 702

Perform image restoration based on the first sample depth completion feature, to generate a first sample dense depth map — 703

Determine a sample guidance map based on the first sample dense depth map, where the sample guidance map is configured for reducing a diffusion randomness of the depth completion network — 704

Aggregate features of the sample guidance map, the sample scene image, the sample sparse depth map, and the sample noise map to obtain a second sample aggregated feature — 705

Perform depth completion on the second sample aggregated feature through diffusing the second sample aggregated feature by the depth completion network based on the sample diffusion strength parameter to obtain a second sample depth completion feature — 706

Perform image restoration based on the second sample depth completion feature, to generate a second sample dense depth map — 707

Determine a completion loss based on a difference between the second sample dense depth map and a sample depth map — 708

Train the depth completion network based on the completion loss — 709

**FIG. 7**

Feature aggregation module — 801

Depth completion module — 802

Image restoration module — 803

**FIG. 8**

900

912

Network

906

908

Display

909

Input device

910

Input/Output
controller

Input/Output system

901

Central
processing unit

911

Network interface
unit

905

System bus

904

902

Random access
memory

903

Read-only
memory

System memory

907

913

Operating system

914

Application
program

Mass storage
device

915

Another program
module

FIG. 9

**EP 4 769 309 A1**

## INTERNATIONAL SEARCH REPORT

International application No.

**PCT/CN2024/113387**

| A. | CLASSIFICATION OF SUBJECT MATTER |
|---|---|

G06T 7/55(2017.01)i;  G06T 5/00(2024.01)i

According to International Patent Classification (IPC) or to both national classification and IPC

| B. | FIELDS SEARCHED |
|---|---|

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 深度, 补全, 稀疏, 扩散, 强度, 反向, 神经网络, 完整度, depth, completion, sparsity, diffusion, strength, reverse, neural 1w network, integrity

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| PX | CN 117541637 A (TENCENT TECHNOLOGY (SHENZHEN) CO., LTD.) 09 February 2024 (2024-02-09)<br>claims 1-16, and description, paragraphs [0006]-[0017] | 1-16 |
| X | CN 112446909 A (SHANGHAI SENSETIME LINGANG INTELLIGENT TECHNOLOGY CO., LTD.) 05 March 2021 (2021-03-05)<br>description, paragraphs [0118]-[0355] | 1, 9-16 |
| A | CN 113763447 A (BEIJING DILUSENSE TECHNOLOGY CO., LTD. et al.) 07 December 2021 (2021-12-07)<br>entire document | 1-16 |
| A | US 2022262023 A1 (TOYOTA MOTOR EUROPE et al.) 18 August 2022 (2022-08-18)<br>entire document | 1-16 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 October 2024** | **30 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

32

## INTERNATIONAL SEARCH REPORT
### Information on patent family members

International application No.

**PCT/CN2024/113387**

| Patent document cited in search report | | | Publication date (day/month/year) | Patent family member(s) | | | Publication date (day/month/year) |
|---|---|---|---|---|---|---|---|
| CN | 117541637 | A | 09 February 2024 | None | | | |
| CN | 112446909 | A | 05 March 2021 | WO | 2021036135 | A1 | 04 March 2021 |
| | | | | KR | 20210027269 | A | 10 March 2021 |
| | | | | US | 2021082135 | A1 | 18 March 2021 |
| | | | | SG | 11202012443 | A1 | 29 April 2021 |
| | | | | JP | 7143449 | B2 | 28 September 2022 |
| CN | 113763447 | A | 07 December 2021 | None | | | |
| US | 2022262023 | A1 | 18 August 2022 | WO | 2021013334 | A1 | 28 January 2021 |

Form PCT/ISA/210 (patent family annex) (July 2022)

**REFERENCES CITED IN THE DESCRIPTION**

**Patent documents cited in the description**

- CN 202311375449